# EUROPEAN PATENT APPLICATION

(11) **EP 4 311 363 A1**
(43) Date of publication of application: **24.01.2024**
(21) Application number: 21932102.3
(22) Date of filing: 24.03.2021
(51) Int. Cl.: H04W 74/00, H04W 74/08

(54) **RESOURCE CONFIGURATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: FAN, Jiangsheng, Dongguan, Guangdong 523860 (CN)
(74) Representative: Ipside
(86) International application number: PCT/CN2021/082560
(87) International publication number: WO 2022/198473

(57) **Abstract**

The disclosure relates to a method for resource configuration, a terminal device, and a network device. The method includes the following. A terminal device receives first configuration information transmitted by a network device, where the first configuration information includes one or more sets of random access resource configuration, and the first configuration information indicates that the terminal device is to initiate a random access procedure according to the one or more sets of random access resource configuration. In implementations of the disclosure, the configuration mechanism of random access resources can be optimized, the average time consumption of the random access procedure of the terminal device can be reduced, and the user experience can be improved.

## Description

### TECHNICAL FIELD

The disclosure relates to the field of communication, and more particularly, to a method for resource configuration, a terminal device, and a network device.

### BACKGROUND

In a non-terrestrial network (NTN) system, due to the long communication distance between a terminal device and a satellite, a round trip time (RTT) of signal transmission is much longer than an RTT in a terrestrial communication system, and a propagation delay ranges from tens to hundreds of milliseconds and is significantly different from a delay in a common terrestrial system. On the other hand, for a random access procedure of the terminal device, the terminal device transmits a preamble in a random access attempt, and waits for a response message from the network in a random access response (RAR) window. If no response message is received within the window, the terminal device determines that this random access attempt fails and then may initiate a random access attempt again.

Since the propagation delay in the satellite communication system is much greater the delay in the terrestrial system, it takes a long time for the terminal in the satellite system to determine whether one random access attempt is successful. Furthermore, if the terminal device determines that the random access attempt fails, the terminal needs to continue to wait for a long time to determine whether a next random access attempt is successful, and the large delay characteristic degrades the user experience.

### SUMMARY

In view of this, implementations of the disclosure provide a method for resource configuration, a terminal device, and a network device, which can be used for random access resource configuration.

Implementations of the disclosure provide a method for resource configuration. The method is applied to a terminal device and includes the following. The terminal device receives first configuration information transmitted by a network device, where the first configuration information includes one or more sets of random access resource configuration, and the first configuration information indicates that the terminal device is to initiate a random access procedure according to the one or more sets of random access resource configuration.

Implementations of the disclosure provide a method for resource configuration. The method is applied to a network device and includes the following. The network device transmits first configuration information to a terminal device, where the first configuration information includes one or more sets of random access resource configuration, and the first configuration information indicates that the terminal device is to initiate a random access procedure according to the one or more sets of random access resource configuration.

Implementations of the disclosure further provide a terminal device. The terminal device includes a receiving module. The receiving module is configured to receive first configuration information transmitted by a network device, where the first configuration information includes one or more sets of random access resource configuration, and the first configuration information indicates that the terminal device is to initiate a random access procedure according to the one or more sets of random access resource configuration.

Implementations of the disclosure further provide a network device. The network device includes a transmitting module. The transmitting module is configured to transmit first configuration information to a terminal device, where the first configuration information includes one or more sets of random access resource configuration, and the first configuration information indicates that the terminal device is to initiate a random access procedure according to the one or more sets of random access resource configuration.

Implementations of the disclosure further provide a terminal device. The terminal device includes a processor, a memory, and a transceiver. The memory is configured to store computer programs. The processor is configured to invoke and execute the computer programs stored in the memory to control the transceiver to perform the method described above.

Implementations of the disclosure further provide a network device. The network device includes a processor, a memory, and a transceiver. The memory is configured to store computer programs. The processor is configured to invoke and execute the computer programs stored in the memory to control the transceiver to perform the method described above.

Implementations of the disclosure further provide a chip. The chip includes at least one processor circuit configured to invoke and execute computer programs stored in a memory, to cause a device equipped with the chip to perform the method described above.

Implementations of the disclosure further provide a computer-readable storage medium for storing computer programs. The computer programs are operable with a computer to perform the method described above.

Implementations of the disclosure further provide a computer program product. The computer program product includes computer program instructions operable with a computer to perform the method described above.

Implementations of the disclosure further provide a computer program operable with a computer to perform the method described above.

According to implementations of the disclosure, the network device can configure one or more sets of random access resource configuration for the terminal device, and the terminal device can select according to the current situation a set of suitable random access resource configuration to initiate the random access procedure, thereby increasing the success probability of random access. Therefore, in implementations of the disclosure, the time consumption of the random access procedure can be reduced, the delay can be reduced, the overall performance of the system can be improved, and the user experience can be improved.

### BRIEF DESCRIPTION OF THE DRAWINGS

FIG. 1 is a schematic diagram of an architecture of a communication system according to implementations of the disclosure.
FIG. 2 is a flowchart of a method for resource configuration at a terminal side according to implementations of the disclosure.
FIG. 3 is a flowchart of a method for resource configuration at a network side according to implementations of the disclosure.
FIG. 4 is a schematic diagram of a process of obtaining first configuration information by a terminal device according to implementations of the disclosure.
FIG. 5 is schematic structural block diagram of a terminal device according to implementations of the disclosure.
FIG. 6 is schematic structural block diagram of a network device according to implementations of the disclosure.
FIG. 7 is a schematic block diagram of a communication device according to implementations of the disclosure.
FIG. 8 is a schematic block diagram of a chip according to implementations of the disclosure.
FIG. 9 is a schematic block diagram of a communication system according to implementations of the disclosure.

### DETAILED DESCRIPTION

The following will describe technical solutions of implementations of the disclosure with reference to the accompanying drawings.

The technical solutions of implementations of the disclosure are applicable to various communication systems, for example, a global system of mobile communication (GSM), a code division multiple access (CDMA) system, a wideband code division multiple access (WCDMA) system, a general packet radio service (GPRS) system, a long term evolution (LTE) system, an advanced LTE (LTE-A) system, a new radio (NR) system, an evolved system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area networks (WLAN), a wireless fidelity (WiFi), a 5th-generation (5G) system, or other communication systems.

Generally speaking, a conventional communication system generally supports a limited number of connections and therefore is easy to implement. However, with development of communication technology, a mobile communication system will not only support conventional communication but also support, for example, device to device (D2D) communication, machine to machine (M2M) communication, machine type communication (MTC), and vehicle to vehicle (V2V) communication, or vehicle to everything (V2X) communication. Implementations of the disclosure can also be applied to these communication systems.

In implementations of the disclosure, a communication system may be applied to a carrier aggregation (CA) scenario, a dual connectivity (DC) scenario, or a standalone (SA) network deployment scenario.

Implementations of the disclosure have been described in connection with the network device and the terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, or a user device.

In implementations of the disclosure, the terminal device may be a station (ST) in a WLAN, a cellular radio telephone, a cordless telephone, a session initiation protocol (SIP) telephone, a wireless local loop (WLL) station, a personal digital assistant (PDA), a handheld device with wireless communication functions, a computing device, other processing devices coupled with a wireless modem, an in-vehicle device, a wearable device, and a next-generation communication system, for example, a terminal device in an NR network, a terminal device in a future evolved public land mobile network (PLMN), etc.

In implementations of the disclosure, the terminal device may be deployed on land, for example, deployed indoors or outdoors, and may be handheld, wearable, or vehicle-mounted. The terminal device may also be deployed on water, for example, on a ship, etc. The terminal device may also be deployed in the air, for example, on an airplane, an air balloon, a satellite, etc.

In implementations of the disclosure, the terminal device may be a mobile phone, a pad, a computer with a wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, etc.

In implementations of the disclosure, the terminal device may also be a wearable device. The wearable device may also be called a wearable smart device, which is a generic term of wearable devices obtained through intelligentization designing and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In implementations of the disclosure, the network device may be a device configured to communicate with a mobile device, and the network device may be an access point (AP) in the WLAN, a base transceiver station (BTS) in the GSM or CDMA, may also be a Node B (NB) in WCDMA, and may further be an evolutional Node B (eNB or eNodeB) in LTE, or a relay station or AP, or an in-vehicle device, a wearable device, a network device or a g-Node B (gNB) in the NR network, a network device in the future evolved PLMN, etc.

In implementations of the disclosure, the network device may be of mobility. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station located on land, water, etc.

In implementations of the disclosure, the network device can provide services for a cell, and the terminal device communicates with the network device through a transmission resource (for example, a frequency-domain resource or a spectrum resource) for the cell. The cell may be a cell corresponding to the network device (for example, a base station). The cell may correspond to a macro base station, and may correspond to a base station corresponding to a small cell. The small cell may include: a metro cell, a micro cell, a pico cell, a femto cell, and the like. These small cells are characterized by small coverage and low transmission power and are adapted to provide data transmission service with high-rate.

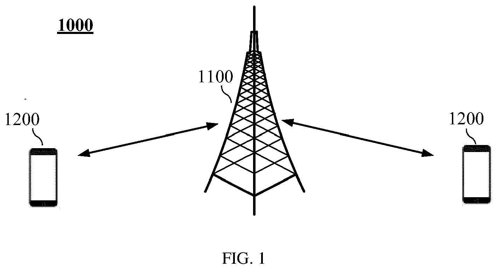

FIG. 1 schematically illustrates one network device 1100 and two terminal devices 1200. Optionally, a wireless communication system 1000 may include multiple network devices 1100, and there may be other numbers of terminal devices in the coverage of each network device 1100, which is not limited herein. The wireless communication system 1000 illustrated in FIG. 1 may further include other network entities such as a mobility management entity (MME), an access and mobility management function (AMF), etc., which is not limited herein.

It should be understood that, the terms "system" and "network" herein are usually interchangeable. The term "and/or" herein is used to describe an association relationship between associated objects and represents that three relationships may exist. For example, A and/or B may represent the following three cases: only A exists, both A and B exist, and only B exists. The character "j" herein generally indicates an "or" relationship between the associated objects. In the description of embodiments of the disclosure, the term "corresponding" can mean that there is a direct or indirect correspondence between two elements, or that there is an association between two elements, or that there is a relationship of "indicating" and "being indicated", "configuring" and "being configured", and the like.

To clearly illustrate the idea of implementations of the disclosure, the relevant content of the random access procedure in the communication system will be briefly described first.

### 1) 5G system

Application scenarios of 5G systems mainly include enhanced mobile broadband (eMBB), ultra reliability and low latency communication (URLLC), and massive machine type communication (mMTC). In 5G network environment, for reduction of air interface signalings and fast recovery of wireless connections and data services, a new radio resource control (RRC) state, i.e., an RRC_INACTIVE state is defined. The RRC_INACTIVE state is different from an RRC_IDLE state and an RRC_CONNECTED state.

In the RRC_IDLE state, mobility is based on UE cell selection/reselection, paging is initiated by a core network (CN), a paging area is configured by the CN, there is no UE access stratum (AS) context at the base station side, and there is no RRC connection.

In the RRC_CONNECTED state, the RRC connection exists, the UE AS context exists in the base station and the UE, the network side is aware of a location of the UE in a cell level, and unicast data can be transmitted between the UE and the base station.

In the RRC_INACTIVE state, the mobility is based on UE cell selection/reselection, there is a CN-NG-RAN connection, the UE AS context exists in a certain base station, the paging is triggered by a radio access network (RAN), an RAN-based paging area is managed by the RAN, and the network side is aware of an RAN paging area level-based location of the UE.

### 2) Random access procedure

According to the type of the random access resource, the random access procedure can be classified as contention based random access (contention based RACH, CBRA) or contention free random access (contention free RACH, CFRA). The random access resource generally includes random access occasion (RACH occasion, RO) resource configuration and preamble resource configuration. For CBRA, the RO and the preamble used by the terminal to initiate the random access procedure are shared or common to all terminal devices in the cell. For CFRA, the RO and the preamble used by the terminal to initiate the random access procedure are specially allocated by the cell to the terminal. Both a four-step random access procedure and a two-step random access procedure support random access resource configuration of CBRA and CFRA.

Generally, one random access procedure includes at least one random access attempt. After transmitting a preamble in a random access attempt, the terminal waits for a response message from the network in a random access response (RAR) window. If no response message is received within the RAR window, the terminal device determines that this random access attempt fails, and initiates a random access attempt again after a time indicated by a backoff indicator (BI). If the random access attempt fails for the maximum number of attempts, the terminal device determines that the random access procedure fails.

### 3) Satellite communication system

A satellite can be classified as a GEO satellite, a MEO satellite, or a LEO satellite. Depending on different orbital altitudes, the coverage diameter of the GEO satellite can reach thousands of kilometers, and the coverage diameter of the MEO satellite or the LEO satellite ranges from tens of kilometers to thousands of kilometers. The coverage diameter of a terrestrial cell usually ranges from hundreds of meters to thousands of meters. The coverage area of a satellite cell is much larger than the coverage area of the terrestrial cell. The orbital altitude of a satellite ranges from hundreds of kilometers to tens of thousands of kilometers. A response from the satellite cell to a signal transmitted by the terminal takes several milliseconds to hundreds of milliseconds to arrive. Therefore, large delay is a basic characteristic of satellite communication.

Since the signal propagation delay in the satellite communication system is much greater than the delay in the terrestrial system, it takes a long time (ranging from several milliseconds to hundreds of milliseconds, depending on the satellite altitude) for the terminal to determine whether a random access attempt is successful. Further, if this random access attempt fails, the terminal needs to wait for a long time to determine whether a next random access attempt is successful. Therefore, in the satellite system, it takes much longer time for the terminal to complete the random access procedure than in the terrestrial system, which results in an excessive delay, an impact on the overall system performance, and a poor user experience.

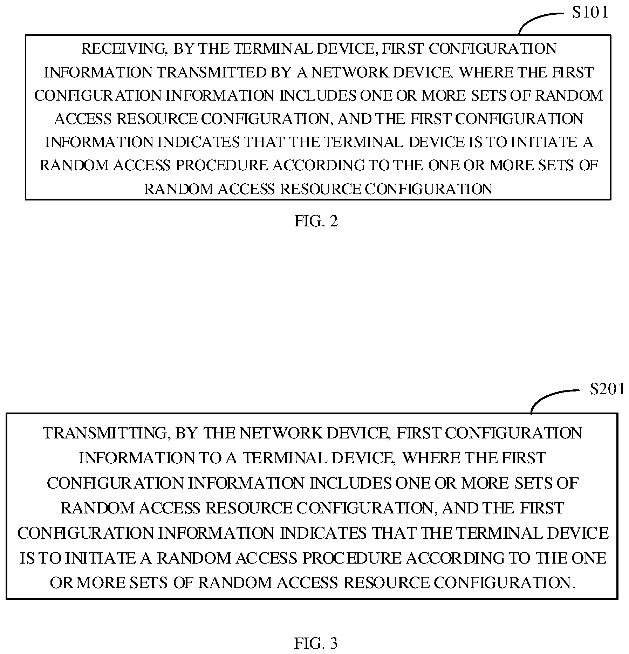

To this end, implementations of the disclosure provide a method for resource configuration. The method is applied to a terminal device. Referring to FIG. 2, the method includes the following.

S 101. The terminal device receives first configuration information transmitted by a network device, where the first configuration information includes one or more sets of random access resource configuration, and the first configuration information indicates that the terminal device is to initiate a random access procedure according to the one or more sets of random access resource configuration.

According to implementations of the disclosure, the network device can transmit one or more sets of random access resource configuration to the terminal, and the terminal can select according to the current situation a set of suitable random access resource configuration to initiate the random access procedure, thereby increasing the probability of successful detection of a MSG1 (for a four-step random access procedure) or a MSGA (for a two-step random access procedure) by the network to a certain extent, and reducing the number of random access attempts of the terminal. Therefore, in implementations of the disclosure, the time consumption of the random access procedure can be reduced, the delay can be reduced, the overall performance of the system can be improved, and the user experience can be improved.

Correspondingly, implementations of the disclosure further provide a method for resource configuration. The method is applied to a network device. Referring to FIG. 3, the method includes the following.

S201. The network device transmits first configuration information to a terminal device, where the first configuration information includes one or more sets of random access resource configuration, and the first configuration information indicates that the terminal device is to initiate a random access procedure according to the one or more sets of random access resource configuration.

According to implementations of the disclosure, the network device can transmit one or more sets of random access resource configuration to the terminal device, and the terminal device can select according to the current situation a set of suitable random access resource configuration to initiate the random access procedure, thereby increasing the probability of successful reception of a random access signal by the network device from the terminal device to a certain extent, and reducing the average number of random access attempts of the terminal device. Therefore, in implementations of the disclosure, the average time consumption of the random access procedure can be reduced, the average delay can be reduced, the overall performance of the system can be improved, and the user experience can be improved.

According to implementations of the disclosure, optionally, random access resource configurations in a single set are all first type of random access resource configurations or second type of random access resource configurations. Specifically, the first type of random access resource configuration includes a dedicated random access preamble root sequence-related configuration, the dedicated random access preamble root sequence-related configuration is in a first association relationship with predefined information, and the second type of random access resource configuration includes a common random access preamble root sequence-related configuration.

That is, in implementations of the disclosure, at least two types of random access resource configurations can be configured for the terminal, one type is conventional common random access preamble root sequence-related configuration (i.e., the second type of random access resource configuration), and the other type is dedicated random access preamble root sequence-related configuration (i.e., the first type of random access resource configuration). The dedicated random access preamble root sequence-related configuration is in the first association relationship with the predefined information.

According to implementations of the disclosure, optionally, the predefined information may include a terminal device type identifier and/or a system application scenario identifier. The terminal device can select a suitable random access resource configuration to initiate the random access procedure according to the type of the terminal device and/or the application scenario of the terminal device, thereby increasing the probability of successful detection of a MSG1 for a four-step random access procedure or a MSGA for a two-step random access procedure by the network device. For example, the network device can configure configurations related to random access preambles of different lengths, and the probabilities of successful detection of random access preambles of different lengths by the network device are different.

According to implementations of the disclosure, optionally, in various implementations of the disclosure, the terminal device may determine a type of the terminal device based on at least one of: (1) a predefined type classification rule; (2) a terminal device type identifier in factory settings; or (3) a terminal device type identifier provided in a non-access stratum (NAS) procedure.

According to implementations of the disclosure, optionally, a type classification rule for the terminal device (which can be understood as determining the type of the terminal device based on the predefined type classification rule mentioned above) may be based on at least one of: the number of transmitting antennas supported by the terminal device, the number of receiving antennas supported by the terminal device, a dual connectivity capability supported by the terminal device, a carrier aggregation capability supported by the terminal device, a bandwidth combination capability supported by the terminal device, a maximum transmit power level supported by the terminal device, a radio access technology (RAT) type supported by the terminal device, a bandwidth size supported by the terminal device, or whether the terminal device is delay-sensitive.

According to implementations of the disclosure, optionally, the system application scenario of the terminal device may include at least one of: a terrestrial communication scenario, a satellite communication scenario, a GEO scenario, a MEO scenario, a LEO scenario, a delay-sensitive scenario, a non-delay-sensitive scenario, or an emergency communication scenario.

According to implementations of the disclosure, optionally, the first association relationship may be an explicit relationship or an implicit relationship, where (1) the first configuration information further includes a terminal device type identifier and/or a system application scenario identifier when the first association relationship is the explicit relationship; and (2) the first association relationship may be predefined in a protocol when the first association relationship is the implicit relationship.

According to implementations of the disclosure, optionally, the first association relationship between the dedicated random access preamble root sequence-related configuration and the terminal device type identifier includes at least one of: a one-to-one mapping, a one-to-multiple mapping, or a multiple-to-multiple mapping. Optionally, the first association relationship between the dedicated random access preamble root sequence-related configuration and the system application scenario identifier includes at least one of: a one-to-one mapping, a one-to-multiple mapping, or a multiple-to-multiple mapping.

As mentioned above, in implementations of the disclosure, the terminal device can select a suitable random access resource configuration to initiate the random access procedure according to the type of the terminal device and/or the application scenario of the terminal device. That is, in implementations of the disclosure, the terminal device can select a suitable random access resource configuration according to the type of the terminal device, or select a suitable random access resource configuration according to the application scenario of the terminal device, or select a random access resource configuration considering both the type of the terminal device and the application scenario of the terminal device. The following schematically describes various resource selection manners.
(I) The terminal device initiates the random access procedure with the second type of random access resource configuration if the first configuration information includes the first type of random access resource configuration and the second type of random access resource configuration and a type of the terminal device is not a terminal device type associated with the first type of random access resource configuration and/or an application scenario of the terminal device is not a terminal device type associated with the first type of random access resource configuration.
(II) The terminal device initiates the random access procedure with the first type of random access resource configuration if the first configuration information includes the first type of random access resource configuration and the type of the terminal device is the terminal device type associated with the first type of random access resource configuration and/or the application scenario of the terminal device is the application scenario associated with the first type of random access resource configuration.
(III) The terminal device initiates the random access procedure with the second type of random access resource configuration if the first configuration information includes the second type of random access resource configuration and does not include the first type of random access resource configuration.

The above provides multiple (more than three) resource selection manners, all of which can achieve the purpose of implementations of the disclosure, which will be described in detail below with specific examples.

In some implementations of the disclosure, optionally, the first configuration information may further include a first threshold, where the terminal device is allowed to initiate the random access procedure with the first type of random access resource configuration if a measurement result of the terminal device on a current serving cell or a target cell satisfies a first condition, where the first condition is the measurement result being less than or equal to the first threshold, or the first condition is the measurement result being greater than or equal to the first threshold.

Further, optionally, the terminal device initiates the random access procedure with the second type of random access resource configuration if the measurement result of the terminal device on the current serving cell or the target cell fails to satisfy the first condition.

Based on implementations of the disclosure, the measurement result of the terminal device on the current serving cell or the target cell is compared with the first threshold configured by the network. If the measurement result is large (or small) enough, the terminal device is allowed to use the first type of random access resource configuration, that is, the terminal device can initiate the random access procedure with the dedicated random access preamble root sequence-related configuration. Otherwise, the terminal device can only initiate the random access procedure with the common random access preamble root sequence-related configuration.

It should be noted that in implementations of the disclosure, the above processing based on the first threshold can be combined with the various resource selection manners (for example, the terminal device can select a suitable random access resource configuration according to the type of the terminal device and/or the application scenario of the terminal device) provided above. For example, if the first configuration information includes both the one or more sets of random access resource configuration and the first threshold information, the following schematically describes several possible processing manners.

In manner 1, whether the measurement result of the terminal device on the current serving cell or the target cell satisfies the first condition is first determined. If the measurement result satisfies the first condition (which indicates that the terminal device is allowed to use the first type of random access resource configuration), a suitable random access resource configuration is selected from the first type of random access resource configuration and/or the second type of random access resource configuration according to the type of the terminal device and/or the application scenario of the terminal device. If the measurement result fails to satisfy the first condition (which indicates that the terminal device is not allowed to use the first type of random access resource configuration), the terminal can only use the second type of random access resource configuration.

In manner 2, a suitable random access resource configuration is first selected from the first type of random access resource configuration and/or the second type of random access resource configuration according to the type and/or the application scenario of the terminal device. After the selection, it is also necessary to determine whether the measurement result of the terminal device on the current serving cell or the target cell satisfies the first condition. If the first condition is satisfied (which indicates that the terminal device is allowed to use the first type of random access resource configuration), and the selected random access resource configuration is the first type of random access resource configuration or the second type of random access resource configuration, the selected random access resource configuration can be used. If the first condition is not satisfied (which indicates that the terminal device is not allowed to use the first type of random access resource configuration), and the selected random access resource configuration is the first type of random access resource configuration, the selected random access resource configuration is not allowed to be used, and the second type of random access resource configuration should be used. Based on the described rule logic, other resource selection manners in other situations can further be determined.

In some implementations of the disclosure, optionally, the first configuration information may further include a second threshold, and the one or more sets of random access resource configuration include: at least one set of dedicated random access preamble root sequence-related configuration and one set of common random access preamble root sequence-related configuration, where the dedicated random access preamble root sequence-related configuration is set according to a cell measurement result.

Further, optionally, the terminal device initiates the random access procedure with the at least one set of dedicated random access preamble root sequence-related configuration if a measurement result of the terminal device on a current serving cell or a target cell satisfies a second condition, where the second condition is the measurement result being less than or equal to the second threshold, or the second condition is the measurement result being greater than or equal to the second threshold.

Further, optionally, the terminal device initiates the random access procedure with the common random access preamble root sequence-related configuration if the measurement result of the terminal device on the current serving cell or the target cell fails to satisfy the second condition.

Based on implementations of the disclosure, a suitable random access resource configuration can be selected according to the measurement result of the terminal only. For example, when the measurement result of the terminal device on the current serving cell or the target cell satisfies the second condition, a set of dedicated random access preamble root sequence-related configuration can be selected for initiating the random access procedure. If the second condition is not satisfied, the common random access preamble root sequence-related configuration is used to initiate the random access procedure.

In various implementations of the disclosure, optionally, the measurement result includes a cell-level measurement result or a beam-level measurement result. Optionally, the measurement result includes at least one of: a reference signal received power (RSRP), a reference signal received quality (RSRQ), or a signal to interference plus noise ratio (SINR). The first threshold and/or the second threshold may be defined according to at least one of the RSRP, the RSRQ, or the SNIR.

In various implementations of the disclosure, optionally, at least one set of random access resource configuration among the one or more sets of random access resource configuration further includes: one or more message A (MSGA) physical uplink shared channel (PUSCH) resource configurations and/or one or more random access occasion (RO) resource configurations associated with a random access preamble root sequence-related configuration in the set of random access resource configuration.

Based on implementations of the disclosure, the network device can configure for the terminal device both the dedicated random access preamble root sequence-related configuration and multiple MSGA PUSCH resources and/or multiple RO resources. Any random access resource mentioned above may be a common random resource configuration used in a contention based random access procedure or a dedicated random resource configuration used in a contention free random access procedure. When initiating a random access attempt, the terminal device can initiate multiple random access attempts with different random access resource configurations, thereby increasing the success probability of random access.

In some implementations of the disclosure, optionally, the first configuration information is used for a resource configuration for a contention free random access procedure, and the first configuration information includes a dedicated random access resource configuration containing one or more dedicated RO resources. Optionally, the one or more dedicated RO resources may be configured in association with a synchronization signal/physical broadcast channel block (SS/PBCH block, SSB) or configured independently of the SSB.

According to implementations of the disclosure, optionally, the dedicated random access resource configuration further includes: a dedicated random access preamble-related configuration corresponding to the one or more dedicated RO resources, and/or one or more dedicated MSGA PUSCH resource configurations associated with the one or more dedicated RO resources.

According to implementations of the disclosure, optionally, the dedicated random access resource configuration containing the one or more dedicated RO resources may belong to a same set of contention free random access resource configuration, or belong to multiple sets of contention free random access resource configuration.

In other words, the network device can configure a set of contention free random access resource configuration or multiple sets of contention free random access resource configuration for the terminal device. Each set of contention free random access resource configuration includes one or more dedicated RO resources and a dedicated random access preamble-related configuration corresponding to the one or more dedicated RO resources and/or one or more dedicated MSGA PUSCH resource configurations associated with the one or more dedicated RO resources. In one random access procedure, the terminal can initiate multiple random access attempts with multiple sets of random access resources. In other words, each time the terminal device initiates a random access attempt, the terminal device can select one set from the multiple sets of dedicated random access resources, thereby increasing the success probability of random access through differentiated configuration of random access resources.

In some implementations of the disclosure, optionally, the first configuration information further includes first indication information, where the first indication information indicates whether the terminal device is allowed to initiate a new random access attempt before an end of an RAR window corresponding to one random access attempt.

According to existing regulations, the terminal device needs to wait until the end of the RAR window before determining that a random access attempt fails, and after determining that the random access attempt fails, the terminal device needs to wait for a period of time before initiating a new random access attempt again. Then, if the terminal device fails several random access attempts, the terminal device needs to wait for a long time. In view of this, according to implementations of the disclosure, the terminal device can be allowed to transmit a new random access attempt before the end of the RAR window corresponding to one random access attempt. Through multiple consecutive transmissions, once the network device successfully detects a random access signal transmitted in any random access attempt, the random access procedure can be considered successful. In this way, the average time consumption of the random access procedure can be reduced. The terminal device can transmit a new random access attempt without waiting for confirmation that the last random access attempt fails. For example, the new random access attempt can be initiated with a same random access resource or with a different random access resource. Once the network device successfully detects at least one of the consecutive random access attempts, the terminal device can receive an RAR response and complete the random access procedure, thereby reducing the average waiting time of the random access procedure of the terminal device and reducing the time consumption.

In some implementations of the disclosure, optionally, the terminal device may initiate multiple random access attempts according to a same random access resource configuration in the one or more sets of random access resource configuration or initiates the multiple random access attempts according to different random access resource configurations in the one or more sets of random access resource configuration, if the terminal device needs to initiate the multiple random access attempts.

Based on implementations of the disclosure, the terminal can initiate a new random access attempt with a same random access resource configuration or with a different random access resource configuration. For example, a random access resource configuration for each random access attempt may be determined based on the multiple configuration manners of the network device and the multiple selection manners of the terminal device described above in the disclosure. A same random access resource configuration as the last random access attempt or a different random access resource configuration from the last random access attempt may be used, both of which can achieve the purpose of implementations of the disclosure.

It should be noted that the above operations are applicable regardless of whether the terminal device is allowed to initiate a new random access attempt before an end of an RAR window corresponding to one random access attempt. That is, if the terminal device can only initiate a next random access attempt after determining that this random access attempt fails, or if the terminal device does not need to confirm that this random access attempt fails before initiating the next random access attempt (i.e., a random access attempt is transmitted again in the RAR window), the terminal device can use a same random access resource as the last random access attempt or a different random access resource from the last random access attempt when initiating the next random access attempt. For example, the terminal device may use a same RO position as the last random access attempt, or a different RO position from the last random access attempt to achieve a frequency division gain. Random access preamble-related configurations and/or MSGA PUSCH resources used in two consecutive random access attempts initiated by the terminal device may be the same or different, which is not limited herein.

In some implementations of the disclosure, optionally, a manner corresponding to the first indication information may also be used in combination with the above manner based on the first association relationship or based on one or more dedicated RO resources, the rule is explained as follows.

When the random access manner corresponding to the first indication information is used in combination with the random access resource selection manner corresponding to the first association relationship, the terminal device first selects a random access resource to be used by the terminal device in the random access resource selection manner corresponding to the first association relationship, where the random access resource includes at least a random access preamble-related configuration, and then the terminal device can initiate a new random access attempt with the selected random access resource before an end of an RAR window corresponding to one random access attempt.

When the random access manner corresponding to the first indication information is used in combination with the random access resource configuration manner based on containing one or more dedicated RO resources, the terminal device can initiate a new random access attempt with a dedicated RO resource at a same position or a different position before an end of an RAR window corresponding to one random access attempt.

In implementations of the disclosure, optionally, the first indication information includes one-bit indication information, and the terminal device is notified through a bit "0" or a bit "1" to activate or deactivate a corresponding function (i.e., whether the terminal device is allowed to initiate a new random access attempt before an end of an RAR window corresponding to one random access attempt).

In implementations of the disclosure, optionally, the first indication information includes a third threshold. The terminal device is allowed to initiate the new random access attempt before the end of the RAR window corresponding to the random access attempt only when a measurement result of a current serving cell or a target cell measured by the terminal device satisfies a third condition. Otherwise, the terminal device is not allowed to initiate the new random access attempt before the end of the RAR window corresponding to the random access attempt if the measurement result of the terminal device on the current serving cell or the target cell fails to satisfy the third condition. The third condition is the measurement result being less than or equal to the third threshold, or the third condition is the measurement result being greater than or equal to the third threshold.

Optionally, the third threshold may be defined for a cell-level measurement result or a beam-level measurement result, and the measurement result corresponding to the third threshold may be at least one of a RSRP, a RSRQ, or an SINR.

In implementations of the disclosure, optionally, the first indication information includes one-bit indication information and a fourth threshold. The terminal device is notified through a bit "0" or a bit "1" to activate or deactivate a corresponding function. The terminal device is allowed to initiate a new random access attempt before an end of an RAR window corresponding to one random access attempt only when the corresponding function (which allows the terminal device to initiate a new random access attempt before an end of an RAR window corresponding to one random access attempt) is in an activated state and the measurement result of the terminal device on the current serving cell or the target cell satisfies a fourth condition. In other cases, the terminal device is not allowed to initiate a new random access attempt before an end of an RAR window corresponding to one random access attempt. The other cases may include the following: (1) the bit indicates that the corresponding function is in a deactivated state, and the measurement result of the terminal device on the current serving cell or the target cell satisfies the fourth condition; (2) the bit indicates that the corresponding function is in an activated state, and the measurement result of the terminal device on the current serving cell or the target cell fails to satisfy the fourth condition; and (3) the bit indicates that the corresponding function is in a deactivated state, and the measurement result of the terminal device on the current serving cell or the target cell fails to satisfy the fourth condition.

That is, in any of the above cases, the terminal device is not allowed to initiate a new random access attempt before an end of an RAR window corresponding to one random access attempt.

The fourth condition is the measurement result being less than or equal to the fourth threshold, or the fourth condition is the measurement result being greater than or equal to the fourth threshold.

According to implementations of the disclosure, optionally, the first configuration information further includes a first time interval threshold and/or a configuration of a maximum number of consecutive random access attempts that the terminal device is allowed to initiate within an RAR window, and the first time interval threshold indicates a minimum time interval between two consecutive random access attempts initiated by the terminal device. The configuration of the maximum number specifies the maximum number of consecutive random access attempts that the terminal device is allowed to initiate within an RAR window.

It should be noted that if the terminal device is allowed to initiate multiple consecutive random access attempts in one RAR window, when the terminal device counts the number of random access attempts initiated in one random access procedure, multiple random access attempts in one RAR window may be counted as only one random access attempt or counted as actual multiple random access attempts, which is not limited herein.

For example, the network device stipulates that the terminal device is allowed to transmit a maximum of six random access attempts in one random access procedure. The terminal transmits two random access attempts in a first RAR window, three random access attempts in a second RAR window, and one random access attempt in a third RAR window. The terminal device can consider that only three random access attempts are transmitted in this random access procedure (calculated according to the number of RAR windows), or consider that the terminal device has transmitted six random access attempts (calculated according to the actual number of random access attempts).

According to implementations of the disclosure, optionally, the first configuration information further includes a first valid time, the first configuration information is valid within the first valid time, and the first configuration information becomes invalid after the first valid time elapses.

According to implementations of the disclosure, optionally, the first configuration information is carried in a system broadcast message or a dedicated signaling.

According to implementations of the disclosure, optionally, the first configuration information may be activated through at least one of: a dedicated signaling, a media access control-control unit (MAC CE), downlink control information (DCI), a paging short message, or a paging message.

Implementation manners of the method for resource configuration in implementations of the disclosure are described above with multiple implementations. Based on at least one implementation of the disclosure, multiple specific examples are provided below to describe various implementation ideas and implementation processes of implementations of the disclosure.

### Implementation 1

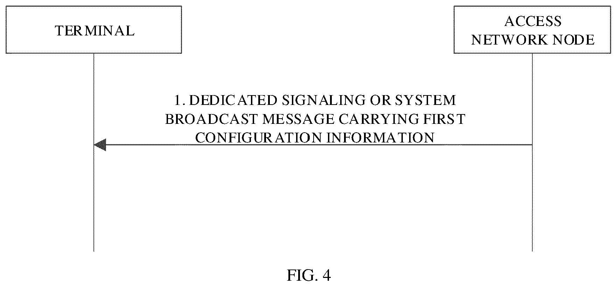

FIG. 4 schematically illustrates a schematic diagram of a process of obtaining first configuration information by a terminal device according to implementations of the disclosure. Step 1: A terminal device receives first configuration information transmitted by an access network device through a system broadcast message or a dedicated signaling, where the first configuration information is used to guide the terminal device to select a suitable random access resource and/or indicate whether the terminal device is allowed to transmit a new random access attempt before an end of an RAR window corresponding to one random access attempt.

To realize the above processing, various ideas may be adopted to design a specific implementation process. For example, three schematic ideas are provided below.

Idea 1: The network device configures a special (or dedicated) random access preamble-related configuration (the first type of random access resource configuration) for the terminal device. The terminal device can select a suitable random access preamble-related configuration from the special random access preamble-related configuration to initiate the random access procedure according to the type of the terminal device and/or the application scenario of the terminal device, thereby improving the probability of successful detection of a MSG1 for a four-step random access procedure or a MSGA for a two-step random access procedure by the network device from the terminal device (where success rates of decoding random access preambles of different configured lengths are different), and reducing the average time consumption of the random access procedure.

Idea 2: The network device configures multiple dedicated ROs for the terminal device, and the terminal can have the following behaviors.

Behavior 1: The terminal device can initiate a next random access attempt only after determining that the previous random access attempt fails (that is, the terminal device fails to receive a response from the network device within an RAR window associated with the random access attempt). For example, each random access attempt may use a same RO position, or use a different RO position to achieve a frequency division gain.

Behavior 2: The terminal device is allowed to transmit a new random access attempt before an end of an RAR window corresponding to one random access attempt. According to existing mechanisms, the terminal device needs to wait until the end of the RAR window to determine that the random access attempt fails, and after determining that the random access attempt fails, the terminal device needs to continue to wait for a period of time before initiating a next random access attempt. If the terminal device fails several random access attempts, the terminal needs to wait for a longer time. In idea 2, through the design of multiple consecutive transmissions, the average time consumption of the random access procedure can be reduced. This is because the terminal device can transmit a new random access attempt without waiting for the confirmation of the failure of the last random access attempt. If the network device can successfully detect at least one of the consecutive random access attempts, the terminal device can receive an RAR response and then complete the random access procedure, thereby reducing the average time consumption of the random access procedure.

Idea 3: idea 1 and idea 2 are combined. That is, the network device configures both a special random access preamble-related configuration and multiple dedicated RO resources for the terminal device, thereby further reducing the time consumption.

### Implementation 2

In this implementation, the first configuration information contains random access preamble-related configurations for different terminal types and/or different application scenarios. This implementation corresponds to idea 1 in implementation 1.

Specifically, the random access preamble-related configuration may at least include one or more random access preamble root sequence-related configurations. In this case, an association relationship between the random access preamble root sequence-related configuration and the terminal type and/or the application scenario (which may be referred to as a first association relationship) is implicit. For example, there may be the following three configuration manners.

(1) Implicit configuration manner 1: The network device configures a dedicated random access preamble root sequence-related configuration for a terminal of a special type, if the dedicated random access preamble root sequence-related configuration appears in the configuration and the terminal device is a terminal of the special type, the terminal device of this type can use the dedicated random access preamble root sequence-related configuration when initiating a random access procedure. Otherwise, the terminal can only use a common random access preamble root sequence-related configuration (the second type of random access resource configuration).

**Table 1**

| | |
|---|---|
| specific terminal type | dedicated random access preamble root sequence-related configuration |
| all terminal types | common random access preamble root sequence-related configuration |

Table 1 lists implicit manner 1 of the random access preamble root sequence-related configuration, where a) if the network device only configures the common random access preamble root sequence-related configuration, all types of terminals can only use the common random access preamble root sequence-related configuration; b) the terminal device can use the dedicated random access preamble root sequence-related configuration only when the dedicated random access preamble root sequence-related configuration appears in the configuration and the terminal is a terminal device of the special type; and c) in other cases, for example, if the dedicated random access preamble root sequence-related configuration appears in the configuration but the terminal is not a terminal of the special type, the terminal can only use the common random access preamble root sequence-related configuration.

Regarding the above terminal types, terminals can be classified in at least one of the following dimensions: the number of transmitting antennas supported by the terminal device, the number of receiving antennas supported by the terminal device, a dual connectivity capability supported by the terminal device, a carrier aggregation capability supported by the terminal device, a bandwidth combination capability supported by the terminal device, a maximum transmit power level supported by the terminal device, a RAT type supported by the terminal device, a bandwidth size supported by the terminal device, or whether the terminal device is delay-sensitive.

In some implementations of the disclosure, terminals may be classified according to feature information in a single dimension. For example, terminals are classified according to the maximum transmit power level of the terminal, a terminal whose maximum transmit power P is lower than a threshold is classified as one type, and a terminal whose maximum transmit power P is higher than the threshold belongs to another type. Multiple thresholds can be used to classify terminals into more terminal types, which is not limited herein. For another example, a terminal supporting satellite communication is classified as one type, and a terminal not supporting satellite communication is classified as another type. The classification manner based on single feature information in other dimensions is similar to this, which will not be repeated herein.

In some implementations of the disclosure, terminals may also be classified according to multi-dimensional composite feature information. For example, a terminal whose maximum transmit power P is higher than a threshold and supporting satellite communication is classified as one type, a terminal different from this case is classified as another type, and so on. The classification manner of terminals based on at least two types of feature information is not limited herein, and a specific classification manner will not be repeated herein.

(2) Implicit configuration manner 2: The network configures a dedicated random access preamble root sequence-related configuration for a terminal in a special application scenario.

**Table 2**

| | |
|---|---|
| special application scenario | dedicated random access preamble root sequence-related configuration |
| all application scenarios | common random access preamble root sequence-related configuration |

Table 2 lists implicit manner 2 of the random access preamble root sequence-related configuration, where a) if the network device only configures the common random access preamble root sequence-related configuration, terminals in all application scenarios can only use the common random access preamble root sequence-related configuration; b) the terminal can use the dedicated random access preamble root sequence-related configuration only when the dedicated random access preamble root sequence-related configuration appears in the configuration and the terminal recognizes that a current communication system is in a special application scenario; and c) in other cases, for example, if the dedicated random access preamble root sequence-related configuration appears in the configuration but the current communication system is not in a special application scenario, the terminal can only use the common random access preamble root sequence-related configuration.

Special application scenarios can be classified in at least one of the following dimensions: a terrestrial communication scenario, a satellite communication scenario, a GEO scenario, a MEO scenario, a LEO scenario, a delay-sensitive scenario, a non-delay-sensitive scenario, or an emergency communication scenario.

In some implementations of the disclosure, special application scenarios may be classified according to feature information in a single dimension. For example, delay-sensitive scenarios are one type, and other scenarios are another type. For another example, satellite communication scenarios are classified as one type, and non-satellite communication scenarios are classified as another type. The classification manner based on single feature information in other dimensions is similar to this, which will not be repeated herein.

In some implementations of the disclosure, special application scenarios may be classified according to multi-dimensional composite feature information. For example, scenarios belonging to both delay-sensitive scenarios and satellite communication scenarios are classified as one type, and other scenarios are classified as another type, and so on. The classification manner of terminals based on at least two types of feature information is not limited herein, and a specific classification manner will not be repeated herein.

(3) Implicit configuration manner 3: The network configures a dedicated random access preamble root sequence-related configuration for a terminal of a special type in a special application scenario.

**Table 3**

| | |
|---|---|
| special terminal type and special application scenario | dedicated random access preamble root sequence-related configuration |
| any scenario | common random access preamble root sequence-related configuration |

Table 3 lists implicit manner 3 of the random access preamble root sequence-related configuration, where a) if the network device only configures the common random access preamble root sequence-related configuration, terminals of any type in all application scenarios can only use the common random access preamble root sequence-related configuration; b) the terminal device can use the dedicated random access preamble root sequence-related configuration only when the dedicated random access preamble root sequence-related configuration appears in the configuration and the terminal recognizes that a current communication system is in a special application scenario and the terminal device is a terminal of a special type; and c) in other cases, the terminal device can only use the common random access preamble root sequence-related configuration.

On the other hand, instead of an implicit indication, implementations of the disclosure may also adopt an explicit indication. If the random access preamble-related configuration includes both the random access preamble root sequence-related configuration and corresponding terminal type information and/or application scenario information, an association relationship between the random access preamble root sequence-related configuration and the terminal type and/or the application scenario (i.e., the first association relationship) is explicit. For example, there may be the following three configuration manners.

(1) Explicit configuration manner 1:

**Table 4**

| | |
|---|---|
| type 1 terminal identifier information | dedicated random access preamble root sequence-related configuration 1 |
| type 2 terminal identifier information | dedicated random access preamble root sequence-related configuration 2 |
| ... | ... |
| type N terminal identifier information | dedicated random access preamble root sequence-related configuration N |
| common random access preamble root sequence-related configuration (default configuration) | |

Referring to random access preamble root sequence explicit configuration manner 1 illustrated in Table 4, each dedicated random access preamble root sequence-related configuration is associated with one terminal type identifier information, and the terminal determines a target random access preamble root sequence-related configuration according to terminal type identifier information of the terminal device and use this configuration for the random access procedure. If the terminal type identifier information matches but a dedicated random access preamble root sequence-related configuration corresponding to the type is not configured, the terminal uses the common random access preamble root sequence-related configuration of the system. If the terminal type identifier information fails to match any terminal type identifier information configured in Table 4, the terminal uses the common random access preamble root sequence-related configuration of the system.

It should be noted that a configuration manner where multiple terminal type identifier information is associated with one dedicated random access preamble root sequence-related configuration is not excluded, and this configuration manner is not limited herein.

(2) Explicit configuration manner 2:

**Table 5**

| | |
|---|---|
| application scenario 1 identifier information | dedicated random access preamble root sequence-related configuration 1 |
| application scenario 2 identifier information | dedicated random access preamble root sequence-related configuration 2 |
| ... | ... |
| application scenario N identifier information | dedicated random access preamble root sequence-related configuration N |
| common random access preamble root sequence-related configuration (default configuration) | |

Referring to random access preamble root sequence explicit configuration manner 2 illustrated in Table 5, each dedicated random access preamble root sequence-related configuration is associated with one application scenario identifier information, and the terminal determines a target random access preamble root sequence-related configuration according to an application scenario of the terminal device and use this configuration for the random access procedure. If the application scenario identifier information matches but a dedicated random access preamble root sequence-related configuration corresponding to the application scenario is not configured, the terminal uses the common random access preamble root sequence-related configuration of the system. If the identifier information corresponding to the application scenario of the terminal fails to match any application scenario identifier information configured in Table 5, the terminal uses the common random access preamble root sequence-related configuration of the system.

It should be noted that a configuration manner where multiple application scenario identifier information is associated with one dedicated random access preamble root sequence-related configuration is not excluded, and this configuration manner is not limited herein.

### (3) Explicit configuration manner 3:

Referring to random access preamble root sequence explicit configuration manner 3 illustrated in Table 6, each dedicated random access preamble root sequence-related configuration is associated with one application scenario identifier information and at least one terminal type identifier information, and the terminal device determines a target random access preamble root sequence-related configuration according to an application scenario of the terminal device and a terminal type of the terminal device and use this configuration for the random access procedure. The terminal device can use corresponding dedicated random access preamble root sequence-related configuration information only when the application scenario identifier information and the terminal type of the terminal device match at least one row of information in Table 6. Otherwise, in any other scenario, the terminal can only use the common random access preamble root sequence-related configuration.

**Table 6**

| | |
|---|---|
| application scenario 1 identifier information and at least one terminal type identifier information | dedicated random access preamble root sequence-related configuration 1 |
| application scenario 2 identifier information and at least one terminal type identifier information | dedicated random access preamble root sequence-related configuration 2 |
| ... | ... |
| application scenario N identifier information and at least one terminal type identifier information | dedicated random access preamble root sequence-related configuration N |
| common random access preamble root sequence-related configuration (default configuration) | |

The first association relationship between the random access preamble root sequence-related configuration and the terminal type and/or the application scenario may include at least one of: a one-to-one mapping, a one-to-multiple mapping, or a multiple-to-multiple mapping. In addition, N in tables 4 to 6 is positive integer greater than or equal to 1.

### Implementation 3

In implementations of the disclosure, the random access preamble-related configuration further includes configuration information of a first threshold, and the terminal can use the dedicated random access preamble root sequence-related configuration when a measurement result of a current cell measured by the terminal satisfied a first predefined condition (the first predefined condition is related to the first threshold). The following exemplarily describes various implementation manners.

Manner 1: If the first predefined condition is satisfied, the terminal device is allowed to select a suitable resource with a dedicated resource configuration mechanism described in implementation 2, that is, the terminal device is allowed to determine based on at least one of tables 1 to 6 a resource configuration used when initiating random access (which may be the dedicated random access preamble root sequence-related configuration or the common random access preamble root sequence-related configuration).

Manner 2: The terminal device may first determine the resource configuration used when initiating random access according to the dedicated resource configuration mechanism described in implementation 2. If the terminal device determines to use the dedicated random access preamble root sequence-related configuration, whether the first predefined condition is satisfied needs to be determined. If the first predefined condition is satisfied, the dedicated random access preamble root sequence-related configuration is available. If the first predefined condition is not satisfied, the dedicated random access preamble root sequence-related configuration is unavailable, and the common random access preamble root sequence-related configuration should be used.

The first predefined condition may be the measurement result of the terminal on the current serving cell or the target cell being less than or equal to the first threshold. In some implementations, the first predefined condition may be the measurement result being greater than or equal to the first threshold. Table 7 schematically lists a determination manner of a random access preamble root sequence-related configuration based on the configuration information of the first threshold.

**Table 7**

| scenario | configuration for scenario |
|---|---|
| scenario 1: the measurement result of the current cell is lower than the first threshold | choose to use the dedicated random access preamble root sequence-related configuration or the common random access preamble root sequence-related configuration based on implementation 2 |
| scenario 2: the measurement result of the current cell is higher than the first threshold | common random access preamble root sequence-related configuration |

It should be noted that the resource selection manner corresponding to Table 7 is used in combination with any of the manners in tables 1 to 6 in implementation 2, which can be considered as a secondary matching logic. For example, in one case, the terminal can select the dedicated random access preamble root sequence-related configuration only when both any of the manner conditions in tables 1 to 6 and the constraint condition in Table 7 are satisfied.

In another implementation of the disclosure, the random access preamble-related configuration further includes configuration information of a second threshold. When the network device transmits the configuration information of the second threshold, the network device also needs to transmit at least one set of dedicated random access preamble root sequence-related configuration and/or one set of common random access preamble root sequence-related configuration. If a second predefined condition is satisfied, the terminal uses the dedicated random access preamble root sequence-related configuration, for example, selects one set randomly from the at least one set of dedicated random access preamble root sequence-related configuration. If the second predefined condition is not satisfied, the terminal uses the set of common random access preamble root sequence-related configuration.

The second predefined condition may be the measurement result of the terminal on the current serving cell or the target cell being less than or equal to the second threshold. In some implementations, the second predefined condition may be the measurement result being greater than or equal to the second threshold. Table 8 schematically lists a determination manner of a random access preamble root sequence-related configuration based on the configuration information of the second threshold.

As illustrated in Table 8, two sets of random access preamble root sequence-related configuration are configured at the network side. In scenario 1, the terminal chooses to use the dedicated random access preamble root sequence-related configuration to initiate the random access procedure. In scenario 2, the terminal chooses to use the common random access preamble root sequence-related configuration to initiate the random access procedure.

**Table 8**

| scenario | configuration for scenario |
|---|---|
| scenario 1: the measurement result of the current cell is lower than the second threshold | dedicated random access preamble root sequence-related configuration |
| scenario 2: the measurement result of the current cell is higher than the second threshold | common random access preamble root sequence-related configuration |

It should be noted that the cell measurement result in Table 7 and Table 8 may be a cell-level measurement result or a beam-level measurement result, where the measurement result may include one or any combination of an RSRP, an RSRQ, and an SINR. That is, the first threshold (or second threshold) information can be compared with respect to the RSRP, the RSRQ, or the SINR. In this case, the first threshold (or second threshold) information contains one parameter. Alternatively, the first threshold (or second threshold) information can be compared with respect to any two or more of the RSRP, the RSRQ, or the SINR. In this case, the first threshold (or second threshold) information contains two or three parameters, which is not limited herein.

### Implementation 4

In this implementation, on the basis of implementation 2 and/or implementation 3, the random access preamble-related configuration may further include a MSGA PUSCH and/or RO resource configuration associated with the random access preamble root sequence-related configuration, and the random access preamble root sequence-related configuration can be associated with the MSGA PUSCH and/or RO resource configuration. After selecting a target random access preamble root sequence-related configuration, the terminal can initiate the random access procedure with a MSGA PUSCH and/or RO resource associated with the target random access preamble root sequence-related configuration.

It should be noted that any random access preamble root sequence-related configuration in tables 1 to 8 can be associated with at least one set of MSGA PUSCH and/or RO resource configuration, and a specific association manner is not limited herein.

### Implementation 5

In this implementation, the first configuration information is used for a resource configuration for a CFRA procedure, and the first configuration information contains a dedicated random access resource configuration corresponding to at least one dedicated RO resource. This implementation corresponds to idea 2 in implementation 1.

To clarify the implementation manner of this implementation more clearly, a brief description of relevant existing regulations is first described below.

According to the existing regulations, the basic idea of a CFRA random access resource configuration is as follows. The network side configures a unique RO and a unique preamble resource for the terminal, and accordingly, the same RO and the same preamble resource will not be allocated to other terminals, so that the network side can quickly identify the current terminal. According to the existing regulations, a CFRA resource is transmitted to the terminal by the network side through a dedicated signaling, and an existing form of the CFRA random access resource configuration is illustrated in Table 9.

**Table 9**

| | |
|---|---|
| CFRA random access resource configuration | dedicated RO time-frequency resource configuration |
| | the number of SSBs associated with one RO |
| | dedicated RO position identifier information (common to all SSBs) |
| | dedicated random access preamble identifier information associated with each SSB |
| | dedicated MSGA PUSCH resource identifier information associated with each SSB (optional) |

Referring to Table 9, in the NR system, ROs are allocated at the granularity of SSB. One SSB can be associated with multiple ROs. When configuring a CFRA random access resource, to make a corresponding dedicated RO under one SSB unique, the dedicated RO needs to be indicated by the dedicated RO position identifier information (RO mask index) in Table 9, where the indication information is common to all SSBs. No matter which SSB the terminal selects to initiate random access, a position number of a dedicated RO to be used under the SSB is the same. Table 10 schematically illustrates an association relationship between SSBs and ROs.

**Table 10**

| | |
|---|---|
| SSB index1 (SSB1) | RO1 |
| | RO2 |
| | RO3 |
| SSB index2 (SSB2) | RO4 |
| | RO5 |
| | RO6 |

For example, in Table 10, the system configures two SSBs, where one of the SSBs is associated with three ROs. For example, if the value of the dedicated RO position identifier information in Table 9 is 0, the terminal can only use RO1 under SSB 1, and can only use RO4 under SSB2. For another example, if the value of the dedicated RO position identifier information in Table 9 is 2, the terminal can only use RO3 under SSB 1, and can only use RO6 under SSB2.

When a condition for using the CFRA resource is satisfied, the terminal can determine a dedicated RO and a preamble resource to be used in this CFRA according to the number of a SSB currently used to initiate the random access procedure in combination with Table 9. When configuring the dedicated MSGA PUSCH resource identifier information associated with each SSB, a dedicated MSGA PUSCH resource may be further determined.

This implementation provides an enhancement to existing solutions. Table 11 schematically illustrates an enhancement manner of the CFRA random access resource configuration of this implementation.

**Table 11**

| | |
|---|---|
| CFRA random access resource configuration | dedicated RO time-frequency resource configuration |
| | the number of SSBs associated with one RO |
| | at least one dedicated RO position identifier information (common to all SSBs) |
| | at least one dedicated random access preamble identifier information associated with each SSB |
| | at least one dedicated MSGA PUSCH resource identifier information associated with each SSB (optional) |

Referring to Table 11, the network device configures more than one dedicated RO resource for the terminal, and each SSB may be associated with one or more dedicated random access preambles and one or more dedicated MSGA PUSCH resources.

In this way, if the CFRA random access resource configuration received by the terminal device and configured by the network device contains more than one dedicated RO position, the terminal device may have the following two behaviors.

Behavior 1: The terminal considers that the network device allows the terminal to transmit a new random access attempt before an end of an RAR window corresponding to one random access attempt. Two adjacent random access attempts may use the same RO position, or use different RO positions to achieve a frequency division gain (different RO positions can be configured through at least one dedicated RO position identifier information in Table 11).

Behavior 2: The terminal can initiate a next random access attempt only after determining that the previous random access attempt fails (that is, the terminal fails to receive a response from the network device within an RAR window associated with the random access attempt). Each random access attempt may use a same RO position, or use a different RO position to achieve a frequency division gain (different RO positions are configured through at least one dedicated RO position identifier information in Table 11).

It should be noted that there may be a one-to-one mapping relationship between the dedicated RO position identifier information in Table 11 and the dedicated random access preamble identifier information associated with each SSB and the dedicated MSGA PUSCH resource identifier information associated with each SSB. That is, one dedicated RO corresponds to one dedicated random access preamble identifier information and one dedicated MSGA PUSCH resource identifier information. In some implementations of the disclosure, the mapping relationship may also be a one-to-multiple mapping. That is, one dedicated RO may correspond to multiple dedicated random access preamble identifier information and multiple dedicated MSGA PUSCH resource identifier information.

Further, this implementation may also adopt an enhanced manner of allocating multiple sets of CFRA random access resource configuration for the terminal. Table 12 schematically illustrates multiple sets of CFRA random access resource configuration.

**Table 12**

| | | |
|---|---|---|
| CFRA random access resource configuration | the first set of CFRA configuration | dedicated RO time-frequency resource configuration |
| | | the number of SSBs associated with one RO |
| | | at least one dedicated RO position identifier information (common to all SSBs) |
| | | at least one dedicated random access preamble identifier information associated with each SSB |
| | | at least one dedicated MSGA PUSCH resource identifier information associated with each SSB (optional) |
| | the second set of CFRA configuration | dedicated RO time-frequency resource configuration |
| | | the number of SSBs associated with one RO |
| | | at least one dedicated RO position identifier information (common to all SSBs) |
| | | at least one dedicated random access preamble identifier information associated with each SSB |
| | | at least one dedicated MSGA PUSCH resource identifier information associated with each SSB (optional) |

Referring to Table 12, two sets of CFRA configurations are illustrated. In other implementations, there may be three or more sets of CFRA configurations. For each set of CFRA configurations, similar to Table 11, the processing manner may include two types of terminal device behaviors and is mainly different in that before initiating each random access attempt, the terminal device needs to first determine which set of CFRA configuration among the multiple sets of CFRA configuration to use. After the selection of the set of CFRA configuration to be used (for example, the first set of CFRA configuration in Table 12), the selection manner of an RO, a dedicated random access preamble resource associated with each SSB, and a dedicated MSGA PUSCH resource associated with each SSB in the set of CFRA configuration is similar to the processing of Table 11, which will not be repeated herein.

It should be noted that the manner in Table 11 or Table 12 can be used in combination with any of the manners in tables 1 to 8. A combination corresponds to idea 3 in implementation 1. Various combinations and superpositions can achieve the purpose of implementations of the disclosure.

### Implementation 6

In implementations of the disclosure, the first configuration information contains indication information indicating whether the terminal is allowed to transmit a new random access attempt before an end of an RAR window corresponding to one random access attempt.

If the first configuration information contains indication information indicating that the terminal device is allowed to transmit a new random access attempt before an end of an RAR window corresponding to one random access attempt, the terminal device may transmit a new random access attempt before an end of an RAR window corresponding to one random access attempt. Otherwise, the terminal device is not allowed to transmit indication information of a new random access attempt before an end of an RAR window corresponding to one random access attempt and needs to confirm that the random access attempt fails before initiating the new random access attempt.

It should be noted that the indication information is applicable to both the two-step random access procedure and the four-step random access procedure, which is not limited herein.

It should be noted that the indication information is applicable to both the CBRA procedure and the CFRA procedure, which is not limited herein.

It should be noted that the indication information can be used in combination with at least one of the manners described in implementations 1 to 5 (that is, the manners corresponding to tables 1 to 8 and Tables 11 to 12). For example, if the indication information is configured as allowed, the manner described in implementations 1 to 5 can be activated and used. If the indication information is configured as not allowed, the manner described in implementations 1 to 5 cannot be activated and used.

### Implementation 7

On the basis of at least one manner in implementations 1 to 6, the first configuration information may contain information of a minimum time interval between two adjacent random access attempts and/or a configuration of a maximum number of consecutive random access attempts that the terminal device is allowed to initiate. If the information of the minimum time interval is indicated in the first configuration information, any two adjacent random access attempts should satisfy the minimum time interval before transmission. The information of the minimum time interval is applicable regardless of whether the terminal is allowed to transmit a new random access attempt before an end of an RAR window corresponding to one random access attempt.

### Implementation 8

On the basis of at least one manner in implementations 1 to 7, the first configuration information may contain valid time configuration information. The first configuration information is valid within a valid time specified in the valid time configuration information, and the first configuration information becomes invalid after the valid time specified in the valid time configuration information elapses.

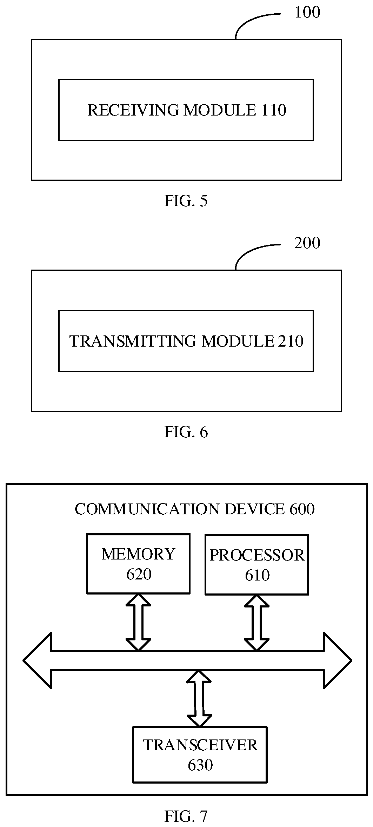

The above describes the specific configuration and implementation of implementations of the disclosure from different perspectives with multiple implementations. Corresponding to the processing manner in at least one implementation above, implementations of the disclosure further provide a terminal device 100. Referring to FIG. 5, the terminal device 100 includes a receiving module 110. The receiving module 110 is configured to receive first configuration information transmitted by a network device, where the first configuration information includes one or more sets of random access resource configuration, and the first configuration information indicates that the terminal device is to initiate a random access procedure according to the one or more sets of random access resource configuration.

Corresponding to the processing manner in at least one implementation above, implementations of the disclosure further provide a network device 200. Referring to FIG. 6, the network device 200 includes a transmitting module 210. The transmitting module 210 is configured to transmit first configuration information to a terminal device, where the first configuration information includes one or more sets of random access resource configuration, and the first configuration information indicates that the terminal device is to initiate a random access procedure according to the one or more sets of random access resource configuration.

The terminal device 100 and the network device 200 in implementations of the disclosure can implement corresponding functions of the device in method implementations. Corresponding processes, functions, implementations, and beneficial effects of various modules (sub-modules, units, or components) in the terminal device 100 and the network device 200 may be described with reference with corresponding descriptions in method implementations, which will not be repeated herein.

It should be noted that, the described functions of various modules (sub-modules, units, or components) in the terminal device 100 and the network device 200 in implementations of the disclosure may be implemented by different modules (sub-modules, units, or components) or by a same module (sub-module, unit, or component). For example, the first transmitting module and the second transmitting module may be different modules or the same module, and can implement corresponding functions in implementations of the disclosure. In addition, the transmitting module and the receiving module in implementations of the disclosure may be implemented as a transceiver of a device, and part or all of the other modules may be implemented as a processor of the device.

FIG. 7 is a schematic block diagram of a communication device 600 according to implementations of the disclosure. The communication device 600 includes a processor 610, which may invoke and execute computer programs stored in a memory to perform the methods in implementations of the disclosure.

Optionally, the communication device 600 may further include a memory 620. The processor 610 may invoke and run a computer program from the memory 620 to perform the methods in implementations of the disclosure.

The memory 620 may be a separate device independent of the processor 610 or may be integrated in the processor 610.

Optionally, the communication device 600 may further include a transceiver 630. The processor 610 may control the transceiver 630 to communicate with other devices. Specifically, the transceiver 630 may transmit information or data to other devices or receive information or data transmitted by other devices.

The transceiver 630 may include a transmitter and a receiver. The transceiver 630 may further include antennas, the number of which may be one or more.

Optionally, the communication device 600 may be the network device in implementations of the disclosure, and the communication device 600 may implement corresponding processes implemented by the network device in various methods according to implementations of the disclosure, which will not be repeated herein.

Optionally, the communication device 600 may be the terminal device in implementations of the disclosure, and the communication device 600 may implement corresponding processes implemented by the terminal device in various methods according to implementations of the disclosure, which will not be repeated herein.

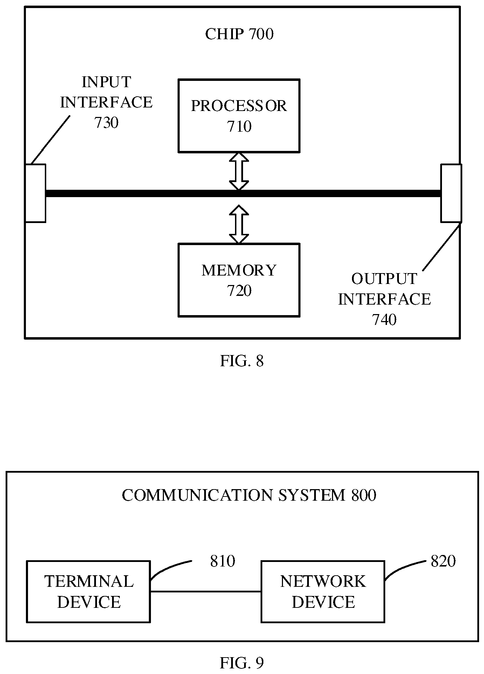

FIG. 8 is a schematic block diagram of a chip 700 according to implementations of the disclosure. The chip 700 includes a processor 710, which may invoke and run a computer program from a memory to perform the methods in implementations of the disclosure. The processor 710 may include at least one processor circuit.

Optionally, the chip 700 may further include a memory 720. The processor 710 may invoke and run a computer program from the memory 720 to perform the methods in implementations of the disclosure.

The memory 720 may be a separate device independent of the processor 710 or may be integrated in the processor 710.

Optionally, the chip 700 may further include an input interface 730. The processor 710 may control the input interface 730 to communicate with other devices or chips. Specifically, the processor 410 may acquire information or data transmitted by other devices or chips.

Optionally, the chip 700 may further include an output interface 740. The processor 710 may control the output interface 740 to communicate with other devices or chips. Specifically, the processor 410 may output information or data to other devices or chips.

Optionally, the chip may be applied to the network device in implementations of the disclosure, and the chip may implement corresponding processes implemented by the network device in various methods according to implementations of the disclosure, which will not be repeated herein.

Optionally, the chip may be applied to the terminal device in implementations of FIG. 5 of the disclosure, and the chip may implement corresponding processes implemented by the terminal device in various methods according to implementations of the disclosure, which will not be repeated herein.

It should be understood that the chip mentioned in implementations of the disclosure may also be referred to as a system-level chip, a system chip, a chip system, or a system-on-chip, etc.

The above-mentioned processor may be a general-purpose processor, a digital signal processor (DSP), a field programmable gate array (FPGA), an application specific integrated circuit (ASIC) or another programmable logic device, a transistor logic device, a discrete hardware component, etc. The general-purpose processor mentioned above may be a microprocessor or any conventional processor.

The above-mentioned memory may be a volatile memory or a non-volatile memory, or may include both volatile and non-volatile memories. The non-volatile memory may be a read-only memory (ROM), a programmable ROM (PROM), an erasable PROM (EPROM), an electrically erasable EPROM (EEPROM), or a flash memory. The volatile memory may be a random access memory (RAM).

It should be understood that the foregoing memories are exemplary but not restrictive description. For example, the memory in implementations of the disclosure may be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), etc. That is, the memory in implementations of the disclosure is intended to include, but is not limited to, these and any other suitable types of memories.

FIG. 9 is a schematic block diagram of a communication system 800 according to implementations of the disclosure. The communication system 800 includes a terminal device 810 and a network device 820.

The terminal device 810 may be configured to implement corresponding functions implemented by the terminal device in the methods in implementations of the disclosure, and the network device 820 may be configured to implement corresponding functions implemented by the network device in the methods in implementations of the disclosure, which will not be repeated herein for the sake of brevity.

The functions in implementations described above may be implemented in whole or in part through software, hardware, firmware, or any combination thereof. When implemented through software, the functions may be implemented in whole or in part in a form of a computer program product. The computer program product includes one or more computer instructions. When the computer program instructions are loaded and executed on a computer, processes or functions are generated in whole or in part according to implementations of the disclosure. The computer may be a general-purpose computer, a special purpose computer, a computer network, or another programmable apparatus. The computer instructions may be stored in a computer-readable storage medium, or may be transmitted from one computer-readable storage medium to another computer-readable storage medium. For example, the computer instructions may be transmitted from a website site, a computer, a server, or a data center to another website site, computer, server, or data center through a wired mode (e.g., a coaxial cable, an optical fiber, and a digital subscriber line (DSL)) or a wireless mode (e.g., infrared radiation, radio, and microwave.). The computer-readable storage medium may be any available medium which a computer may access to, or a data storage device such as a server or data center that includes one or more available media integrated therein. The available medium may be a magnetic medium (e.g., a floppy disk, a hard disk, and a magnetic tape), an optical medium (e.g., a digital video disc (DVD)), or a semiconductor medium (e.g., a solid state disk (SSD)), or the like.

It should be understood that sizes of serial numbers of the foregoing processes do not mean execution sequences in various implementations of the disclosure. The execution sequences of the processes should be determined according to functions and internal logics of the processes, and should not impose any limitation on implementation processes of implementations of the disclosure.

Those skilled in the art may clearly understand that for the sake of convenience and conciseness of description, specific working processes of the systems, apparatuses, and units described above may be known with reference with corresponding processes in the aforementioned method implementations, and will not be repeated herein.

What are described above are specific implementations of the disclosure, but the protection scope of the disclosure is not limited thereto. Any variation or substitution that may easily occur to a person skilled in the art within the technical scope disclosed in the disclosure shall be included within the protection scope of implementations of the disclosure. Therefore, the protection scope of the disclosure shall be subject to the protection scope of the claims.

## Claims

1. A method for resource configuration, being applied to a terminal device and comprising:
receiving, by the terminal device, first configuration information transmitted by a network device, the first configuration information comprising one or more sets of random access resource configuration, and the first configuration information indicating that the terminal device is to initiate a random access procedure according to the one or more sets of random access resource configuration.

2. The method of claim 1, wherein
random access resource configurations in a single set are all first type of random access resource configurations or second type of random access resource configurations, wherein
the first type of random access resource configuration comprises a dedicated random access preamble root sequence-related configuration, the dedicated random access preamble root sequence-related configuration is in a first association relationship with predefined information, and
the second type of random access resource configuration comprises a common random access preamble root sequence-related configuration.

3. The method of claim 2, wherein the predefined information comprises a terminal device type identifier and/or a system application scenario identifier.

4. The method of claim 2 or 3, wherein the first association relationship is an explicit relationship or an implicit relationship.

5. The method of claim 4, wherein the first configuration information further comprises a terminal device type identifier and/or a system application scenario identifier when the first association relationship is the explicit relationship.

6. The method of claim 4, wherein the first association relationship is predefined in a protocol when the first association relationship is the implicit relationship.

7. The method of any of claims 3 to 6, wherein
the first association relationship between the dedicated random access preamble root sequence-related configuration and the terminal device type identifier comprises at least one of: a one-to-one mapping, a one-to-multiple mapping, or a multiple-to-multiple mapping; and/or
the first association relationship between the dedicated random access preamble root sequence-related configuration and the system application scenario identifier comprises at least one of: a one-to-one mapping, a one-to-multiple mapping, or a multiple-to-multiple mapping.

8. The method of any of claims 3 to 7, wherein
the terminal device initiates the random access procedure with the second type of random access resource configuration if the first configuration information comprises the first type of random access resource configuration and the second type of random access resource configuration and a type of the terminal device is not a terminal device type associated with the first type of random access resource configuration and/or an application scenario of the terminal device is not a terminal device type associated with the first type of random access resource configuration; or
the terminal device initiates the random access procedure with the first type of random access resource configuration if the first configuration information comprises the first type of random access resource configuration and the type of the terminal device is the terminal device type associated with the first type of random access resource configuration and/or the application scenario of the terminal device is the application scenario associated with the first type of random access resource configuration; or
the terminal device initiates the random access procedure with the second type of random access resource configuration if the first configuration information comprises the second type of random access resource configuration and does not comprise the first type of random access resource configuration.

9. The method of any of claims 3 to 8, wherein
a type of the terminal device is classified according to at least one of: a number of transmitting antennas supported by the terminal device, a number of receiving antennas supported by the terminal device, a dual connectivity capability supported by the terminal device, a carrier aggregation capability supported by the terminal device, a bandwidth combination capability supported by the terminal device, a maximum transmit power level supported by the terminal device, a radio access technology (RAT) type supported by the terminal device, a bandwidth size supported by the terminal device, or whether the terminal device is delay-sensitive; and/or
a system application scenario comprises at least one of: a terrestrial communication scenario, a satellite communication scenario, a geostationary earth orbit (GEO) scenario, a medium earth orbit (MEO) scenario, a low earth orbit (LEO) scenario, a delay-sensitive scenario, a non-delay-sensitive scenario, or an emergency communication scenario.

10. The method of any of claims 3 to 9, further comprising:
determining, by the terminal device, a type of the terminal device based on at least one of: a predefined type classification rule, a terminal device type identifier in factory settings, or a terminal device type identifier provided in a non-access stratum (NAS) procedure.

11. The method of any of claims 2 to 10, wherein
the first configuration information further comprises a first threshold, and
the terminal device is allowed to initiate the random access procedure with the first type of random access resource configuration if a measurement result of the terminal device on a current serving cell or a target cell satisfies a first condition, wherein
the first condition is the measurement result being less than or equal to the first threshold, or
the first condition is the measurement result being greater than or equal to the first threshold.

12. The method of claim 11, wherein
the terminal device initiates the random access procedure with the second type of random access resource configuration if the measurement result of the terminal device on the current serving cell or the target cell fails to satisfy the first condition.

13. The method of claim 1, wherein
the first configuration information further comprises a second threshold, and
the one or more sets of random access resource configuration comprise: at least one set of dedicated random access preamble root sequence-related configuration and one set of common random access preamble root sequence-related configuration, wherein the dedicated random access preamble root sequence-related configuration is set according to a cell measurement result.

14. The method of claim 13, wherein
the terminal device initiates the random access procedure with the at least one set of dedicated random access preamble root sequence-related configuration if a measurement result of the terminal device on a current serving cell or a target cell satisfies a second condition, wherein
the second condition is the measurement result being less than or equal to the second threshold, or
the second condition is the measurement result being greater than or equal to the second threshold.

15. The method of claim 14, wherein
the terminal device initiates the random access procedure with the common random access preamble root sequence-related configuration if the measurement result of the terminal device on the current serving cell or the target cell fails to satisfy the second condition.

16. The method of any of claims 11 to 15, wherein
the measurement result comprises a cell-level measurement result or a beam-level measurement result.

17. The method of any of claims 11 to 16, wherein
the measurement result comprises at least one of: a reference signal received power (RSRP), a reference signal received quality (RSRQ), or a signal to interference plus noise ratio (SINR).

18. The method of any of claims 2 to 17, wherein
at least one set of random access resource configuration among the one or more sets of random access resource configuration further comprises: one or more message A (MSGA) physical uplink shared channel (PUSCH) resource configurations and/or one or more random access occasion (RO) resource configurations associated with a random access preamble root sequence-related configuration in the set of random access resource configuration.

19. The method of claim 1, wherein
the first configuration information is used for a resource configuration for a contention free random access procedure, and
the first configuration information comprises a dedicated random access resource configuration containing one or more dedicated RO resources.

20. The method of claim 19, wherein
the dedicated random access resource configuration further comprises: a dedicated random access preamble-related configuration corresponding to the one or more dedicated RO resources, and/or one or more dedicated MSGA PUSCH resource configurations corresponding to the one or more dedicated RO resources.

21. The method of claim 19 or 20, wherein
the dedicated random access resource configuration containing the one or more dedicated RO resources belongs to a same set of contention free random access resource configuration; or
the dedicated random access resource configuration containing the one or more dedicated RO resources belongs to a plurality of sets of contention free random access resource configuration.

22. The method of any of claims 1 to 21, wherein
the first configuration information further comprises first indication information, wherein the first indication information indicates whether the terminal device is allowed to initiate a new random access attempt before an end of a random access response (RAR) window corresponding to one random access attempt.

23. The method of claim 22, wherein
the first indication information comprises a first bit, and
the terminal device is allowed to initiate the new random access attempt before the end of the RAR window corresponding to the random access attempt when the first bit is a first value; and
the terminal device is not allowed to initiate the new random access attempt before the end of the RAR window corresponding to the random access attempt when the first bit is a second value.

24. The method of claim 22, wherein
the first indication information comprises a third threshold, and
the terminal device is allowed to initiate the new random access attempt before the end of the RAR window corresponding to the random access attempt if a measurement result of the terminal device on a current serving cell or a target cell satisfies a third condition; and
the terminal device is not allowed to initiate the new random access attempt before the end of the RAR window corresponding to the random access attempt if the measurement result of the terminal device on the current serving cell or the target cell fails to satisfy the third condition, wherein
the third condition is the measurement result being less than or equal to the third threshold, or
the third condition is the measurement result being greater than or equal to the third threshold.

25. The method of claim 22, wherein
the first indication information comprises a second bit and a fourth threshold, and
the terminal device is allowed to initiate the new random access attempt before the end of the RAR window corresponding to the random access attempt if the second bit is a third value and a measurement result of the terminal device on a current serving cell or a target cell satisfies a fourth condition; and
the terminal device is not allowed to initiate the new random access attempt before the end of the RAR window corresponding to the random access attempt if the second bit is a fourth value and/or the measurement result of the terminal device on the current serving cell or the target cell fails to satisfy the fourth condition, wherein
the fourth condition is the measurement result being less than or equal to the fourth threshold, or
the fourth condition is the measurement result being greater than or equal to the fourth threshold.

26. The method of any of claims 1 to 25, wherein
the terminal device initiates a plurality of random access attempts according to a same random access resource configuration in the one or more sets of random access resource configuration if the terminal device needs to initiate the plurality of random access attempts; or
the terminal device initiates the plurality of random access attempts according to different random access resource configurations in the one or more sets of random access resource configuration if the terminal device needs to initiate the plurality of random access attempts.

27. The method of any of claims 1 to 26, wherein
the first configuration information further comprises a first time interval threshold and/or a configuration of a maximum number of consecutive random access attempts that the terminal device is allowed to initiate within an RAR window, and
the first time interval threshold indicates a minimum time interval between two consecutive random access attempts initiated by the terminal device.

28. The method of any of claims 1 to 27, wherein
the first configuration information further comprises a first valid time,
the first configuration information is valid within the first valid time, and
the first configuration information becomes invalid after the first valid time elapses.

29. The method of any of claims 1 to 28, wherein the first configuration information is carried in a system broadcast message or a dedicated signaling.

30. A method for resource configuration, being applied to a network device and comprising:
transmitting, by the network device, first configuration information to a terminal device, the first configuration information comprising one or more sets of random access resource configuration, and the first configuration information indicating that the terminal device is to initiate a random access procedure according to the one or more sets of random access resource configuration.

31. The method of claim 30, wherein
random access resource configurations in a single set are all first type of random access resource configurations or second type of random access resource configurations, wherein
the first type of random access resource configuration comprises a dedicated random access preamble root sequence-related configuration, the dedicated random access preamble root sequence-related configuration is in a first association relationship with predefined information, and
the second type of random access resource configuration comprises a common random access preamble root sequence-related configuration.

32. The method of claim 31, wherein the predefined information comprises a terminal device type identifier and/or a system application scenario identifier.

33. The method of claim 31 or 32, wherein the first association relationship is an explicit relationship or an implicit relationship.

34. The method of claim 33, wherein the first configuration information further comprises a terminal device type identifier and/or a system application scenario identifier when the first association relationship is the explicit relationship.

35. The method of claim 33, wherein the first association relationship is predefined in a protocol when the first association relationship is the implicit relationship.

36. The method of any of claims 32 to 35, wherein
the first association relationship between the dedicated random access preamble root sequence-related configuration and the terminal device type identifier comprises at least one of: a one-to-one mapping, a one-to-multiple mapping, or a multiple-to-multiple mapping; and/or
the first association relationship between the dedicated random access preamble root sequence-related configuration and the system application scenario identifier comprises at least one of: a one-to-one mapping, a one-to-multiple mapping, or a multiple-to-multiple mapping.

37. The method of any of claims 32 to 36, wherein
the first configuration information comprises the first type of random access resource configuration, the second type of random access resource configuration, and the first association relationship; or
the first configuration information comprises the first type of random access resource configuration and the first association relationship and does not comprise the second type of random access resource configuration; or
the first configuration information comprises the second type of random access resource configuration and does not comprise the first type of random access resource configuration.

38. The method of any of claims 32 to 37, wherein
a type of the terminal device is classified according to at least one of: a number of transmitting antennas supported by the terminal device, a number of receiving antennas supported by the terminal device, a dual connectivity capability supported by the terminal device, a carrier aggregation capability supported by the terminal device, a bandwidth combination capability supported by the terminal device, a maximum transmit power level supported by the terminal device, a radio access technology (RAT) type supported by the terminal device, a bandwidth size supported by the terminal device, or whether the terminal device is delay-sensitive; and/or
a system application scenario comprises at least one of: a terrestrial communication scenario, a satellite communication scenario, a geostationary earth orbit (GEO) scenario, a medium earth orbit (MEO) scenario, a low earth orbit (LEO) scenario, a delay-sensitive scenario, a non-delay-sensitive scenario, or an emergency communication scenario.

39. The method of any of claims 31 to 38, wherein
the first configuration information further comprises a first threshold, and
the first threshold is used to allow the terminal device to initiate the random access procedure with the first type of random access resource configuration when a measurement result of the terminal device on a current serving cell or a target cell satisfies a first condition, wherein
the first condition is the measurement result being less than or equal to the first threshold, or
the first condition is the measurement result being greater than or equal to the first threshold.

40. The method of claim 39, wherein
the first threshold is further used for the terminal device to initiate the random access procedure with the second type of random access resource configuration when the measurement result of the terminal device on the current serving cell or the target cell fails to satisfy the first condition.

41. The method of claim 30, wherein
the first configuration information further comprises a second threshold, and
the one or more sets of random access resource configuration comprise: at least one set of dedicated random access preamble root sequence-related configuration and one set of common random access preamble root sequence-related configuration, wherein the dedicated random access preamble root sequence-related configuration is set according to a cell measurement result.

42. The method of claim 41, wherein
the second threshold is used for the terminal device to initiate the random access procedure with the at least one set of dedicated random access preamble root sequence-related configuration when a measurement result of the terminal device on a current serving cell or a target cell satisfies a second condition, wherein
the second condition is the measurement result being less than or equal to the second threshold, or
the second condition is the measurement result being greater than or equal to the second threshold.

43. The method of claim 42, wherein
the second threshold is further used for the terminal device to initiate the random access procedure with the common random access preamble root sequence-related configuration when the measurement result of the terminal device on the current serving cell or the target cell fails to satisfy the second condition.

44. The method of any of claims 39 to 43, wherein
the measurement result comprises a cell-level measurement result or a beam-level measurement result.

45. The method of any of claims 39 to 44, wherein
the measurement result comprises at least one of: a reference signal received power (RSRP), a reference signal received quality (RSRQ), or a signal to interference plus noise ratio (SINR).

46. The method of any of claims 31 to 45, wherein
at least one set of random access resource configuration among the one or more sets of random access resource configuration further comprises: one or more message A (MSGA) physical uplink shared channel (PUSCH) resource configurations and/or one or more random access occasion (RO) resource configurations associated with a random access preamble root sequence-related configuration in the set of random access resource configuration.

47. The method of claim 30, wherein
the first configuration information is used for a resource configuration for a contention free random access procedure, and
the first configuration information comprises a dedicated random access resource configuration containing one or more dedicated RO resources.

48. The method of claim 47, wherein
the dedicated random access resource configuration further comprises: a dedicated random access preamble-related configuration corresponding to the one or more dedicated RO resources, and/or one or more dedicated MSGA PUSCH resource configurations corresponding to the one or more dedicated RO resources.

49. The method of claim 47 or 48, wherein
the dedicated random access resource configuration containing the one or more dedicated RO resources belongs to a same set of contention free random access resource configuration; or
the dedicated random access resource configuration containing the one or more dedicated RO resources belongs to a plurality of sets of contention free random access resource configuration.

50. The method of any of claims 30 to 49, wherein
the first configuration information further comprises first indication information, wherein the first indication information indicates whether the terminal device is allowed to initiate a new random access attempt before an end of a random access response (RAR) window corresponding to one random access attempt.

51. The method of claim 50, wherein
the first indication information comprises a first bit, and
the terminal device is allowed to initiate the new random access attempt before the end of the RAR window corresponding to the random access attempt when the first bit is a first value; and
the terminal device is not allowed to initiate the new random access attempt before the end of the RAR window corresponding to the random access attempt when the first bit is a second value.

52. The method of claim 50, wherein
the first indication information comprises a third threshold, and
the terminal device is allowed to initiate the new random access attempt before the end of the RAR window corresponding to the random access attempt if a measurement result of the terminal device on a current serving cell or a target cell satisfies a third condition; and
the terminal device is not allowed to initiate the new random access attempt before the end of the RAR window corresponding to the random access attempt if the measurement result of the terminal device on the current serving cell or the target cell fails to satisfy the third condition, wherein
the third condition is the measurement result being less than or equal to the third threshold, or
the third condition is the measurement result being greater than or equal to the third threshold.

53. The method of claim 50, wherein
the first indication information comprises a second bit and a fourth threshold, and
the terminal device is allowed to initiate the new random access attempt before the end of the RAR window corresponding to the random access attempt if the second bit is a third value and a measurement result of the terminal device on a current serving cell or a target cell satisfies a fourth condition; and
the terminal device is not allowed to initiate the new random access attempt before the end of the RAR window corresponding to the random access attempt if the second bit is a fourth value and/or the measurement result of the terminal device on the current serving cell or the target cell fails to satisfy the fourth condition, wherein
the fourth condition is the measurement result being less than or equal to the fourth threshold, or
the fourth condition is the measurement result being greater than or equal to the fourth threshold.

54. The method of any of claims 30 to 53, wherein
the first configuration information further comprises a first time interval threshold and/or a configuration of a maximum number of consecutive random access attempts that the terminal device is allowed to initiate within an RAR window, and
the first time interval threshold indicates a minimum time interval between two consecutive random access attempts initiated by the terminal device.

55. The method of any of claims 30 to 54, wherein
the first configuration information further comprises a first valid time,
the first configuration information is valid within the first valid time, and
the first configuration information becomes invalid after the first valid time elapses.

56. The method of any of claims 30 to 55, wherein the first configuration information is carried in a system broadcast message or a dedicated signaling.

57. A terminal device, comprising:
a receiving module configured to: receive first configuration information transmitted by a network device, the first configuration information comprising one or more sets of random access resource configuration, and the first configuration information indicating that the terminal device is to initiate a random access procedure according to the one or more sets of random access resource configuration.

58. The terminal device of claim 57, wherein
random access resource configurations in a single set are all first type of random access resource configurations or second type of random access resource configurations, wherein
the first type of random access resource configuration comprises a dedicated random access preamble root sequence-related configuration, the dedicated random access preamble root sequence-related configuration is in a first association relationship with predefined information, and
the second type of random access resource configuration comprises a common random access preamble root sequence-related configuration.

59. The terminal device of claim 58, wherein the predefined information comprises a terminal device type identifier and/or a system application scenario identifier.

60. The terminal device of claim 58 or 59, wherein the first association relationship is an explicit relationship or an implicit relationship.

61. The terminal device of claim 60, wherein the first configuration information further comprises a terminal device type identifier and/or a system application scenario identifier when the first association relationship is the explicit relationship.

62. The terminal device of claim 60, wherein the first association relationship is predefined in a protocol when the first association relationship is the implicit relationship.

63. The terminal device of any of claims 59 to 62, wherein
the first association relationship between the dedicated random access preamble root sequence-related configuration and the terminal device type identifier comprises at least one of: a one-to-one mapping, a one-to-multiple mapping, or a multiple-to-multiple mapping; and/or
the first association relationship between the dedicated random access preamble root sequence-related configuration and the system application scenario identifier comprises at least one of: a one-to-one mapping, a one-to-multiple mapping, or a multiple-to-multiple mapping.

64. The terminal device of any of claims 59 to 63, wherein
a first initiating module configured to:
initiate the random access procedure with the second type of random access resource configuration when the first configuration information comprises the first type of random access resource configuration and the second type of random access resource configuration and a type of the terminal device is not a terminal device type associated with the first type of random access resource configuration and/or an application scenario of the terminal device is not a terminal device type associated with the first type of random access resource configuration; or
a second initiating module configured to:
initiate the random access procedure with the first type of random access resource configuration when the first configuration information comprises the first type of random access resource configuration and the type of the terminal device is the terminal device type associated with the first type of random access resource configuration and/or the application scenario of the terminal device is the application scenario associated with the first type of random access resource configuration; or
a third initiating module configured to:
initiate the random access procedure with the second type of random access resource configuration when the first configuration information comprises the second type of random access resource configuration and does not comprise the first type of random access resource configuration.

65. The terminal device of any of claims 59 to 64, wherein
a type of the terminal device is classified according to at least one of: a number of transmitting antennas supported by the terminal device, a number of receiving antennas supported by the terminal device, a dual connectivity capability supported by the terminal device, a carrier aggregation capability supported by the terminal device, a bandwidth combination capability supported by the terminal device, a maximum transmit power level supported by the terminal device, a radio access technology (RAT) type supported by the terminal device, a bandwidth size supported by the terminal device, or whether the terminal device is delay-sensitive; and/or
a system application scenario comprises at least one of: a terrestrial communication scenario, a satellite communication scenario, a geostationary earth orbit (GEO) scenario, a medium earth orbit (MEO) scenario, a low earth orbit (LEO) scenario, a delay-sensitive scenario, a non-delay-sensitive scenario, or an emergency communication scenario.

66. The terminal device of any of claims 59 to 65, further comprising a determining module configured to:
determine a type of the terminal device based on at least one of: a predefined type classification rule, a terminal device type identifier in factory settings, or a terminal device type identifier provided in a non-access stratum (NAS) procedure.

67. The terminal device of any of claims 58 to 66, wherein
the first configuration information further comprises a first threshold, and
an allowing module configured to: allow the terminal device to initiate the random access procedure with the first type of random access resource configuration when a measurement result of the terminal device on a current serving cell or a target cell satisfies a first condition, wherein
the first condition is the measurement result being less than or equal to the first threshold, or
the first condition is the measurement result being greater than or equal to the first threshold.

68. The terminal device of claim 67, wherein
the terminal device initiates the random access procedure with the second type of random access resource configuration if the measurement result of the terminal device on the current serving cell or the target cell fails to satisfy the first condition.

69. The terminal device of claim 57, wherein
the first configuration information further comprises a second threshold, and
the one or more sets of random access resource configuration comprise: at least one set of dedicated random access preamble root sequence-related configuration and one set of common random access preamble root sequence-related configuration, wherein the dedicated random access preamble root sequence-related configuration is set according to a cell measurement result.

70. The terminal device of claim 69, wherein
a fourth initiating module configured to: initiate the random access procedure with the at least one set of dedicated random access preamble root sequence-related configuration when a measurement result of the terminal device on a current serving cell or a target cell satisfies a second condition, wherein
the second condition is the measurement result being less than or equal to the second threshold, or
the second condition is the measurement result being greater than or equal to the second threshold.

71. The terminal device of claim 70, wherein the fourth initiating module is configured to:
initiate the random access procedure with the common random access preamble root sequence-related configuration when the measurement result of the terminal device on the current serving cell or the target cell fails to satisfy the second condition.

72. The terminal device of any of claims 67 to 71, wherein
the measurement result comprises a cell-level measurement result or a beam-level measurement result.

73. The terminal device of any of claims 67 to 72, wherein
the measurement result comprises at least one of: a reference signal received power (RSRP), a reference signal received quality (RSRQ), or a signal to interference plus noise ratio (SINR).

74. The terminal device of any of claims 58 to 73, wherein
at least one set of random access resource configuration among the one or more sets of random access resource configuration further comprises: one or more message A (MSGA) physical uplink shared channel (PUSCH) resource configurations and/or one or more random access occasion (RO) resource configurations associated with a random access preamble root sequence-related configuration in the set of random access resource configuration.

75. The terminal device of claim 57, wherein
the first configuration information is used for a resource configuration for a contention free random access procedure, and
the first configuration information comprises a dedicated random access resource configuration containing one or more dedicated RO resources.

76. The terminal device of claim 75, wherein
the dedicated random access resource configuration further comprises: a dedicated random access preamble-related configuration corresponding to the one or more dedicated RO resources, and/or one or more dedicated MSGA PUSCH resource configurations corresponding to the one or more dedicated RO resources.

77. The terminal device of claim 75 or 76, wherein
the dedicated random access resource configuration containing the one or more dedicated RO resources belongs to a same set of contention free random access resource configuration; or
the dedicated random access resource configuration containing the one or more dedicated RO resources belongs to a plurality of sets of contention free random access resource configuration.

78. The terminal device of any of claims 57 to 77, wherein
the first configuration information further comprises first indication information, wherein the first indication information indicates whether the terminal device is allowed to initiate a new random access attempt before an end of a random access response (RAR) window corresponding to one random access attempt.

79. The terminal device of claim 78, wherein
the first indication information comprises a first bit, and
the terminal device is allowed to initiate the new random access attempt before the end of the RAR window corresponding to the random access attempt when the first bit is a first value; and
the terminal device is not allowed to initiate the new random access attempt before the end of the RAR window corresponding to the random access attempt when the first bit is a second value.

80. The terminal device of claim 78, wherein
the first indication information comprises a third threshold, and
the terminal device is allowed to initiate the new random access attempt before the end of the RAR window corresponding to the random access attempt if a measurement result of the terminal device on a current serving cell or a target cell satisfies a third condition; and
the terminal device is not allowed to initiate the new random access attempt before the end of the RAR window corresponding to the random access attempt if the measurement result of the terminal device on the current serving cell or the target cell fails to satisfy the third condition, wherein
the third condition is the measurement result being less than or equal to the third threshold, or
the third condition is the measurement result being greater than or equal to the third threshold.

81. The terminal device of claim 78, wherein
the first indication information comprises a second bit and a fourth threshold, and
the terminal device is allowed to initiate the new random access attempt before the end of the RAR window corresponding to the random access attempt if the second bit is a third value and a measurement result of the terminal device on a current serving cell or a target cell satisfies a fourth condition; and
the terminal device is not allowed to initiate the new random access attempt before the end of the RAR window corresponding to the random access attempt if the second bit is a fourth value and/or the measurement result of the terminal device on the current serving cell or the target cell fails to satisfy the fourth condition, wherein
the fourth condition is the measurement result being less than or equal to the fourth threshold, or
the fourth condition is the measurement result being greater than or equal to the fourth threshold.

82. The terminal device of any of claims 57 to 81, wherein
the terminal device initiates a plurality of random access attempts according to a same random access resource configuration in the one or more sets of random access resource configuration if the terminal device needs to initiate the plurality of random access attempts; or
the terminal device initiates the plurality of random access attempts according to different random access resource configurations in the one or more sets of random access resource configuration if the terminal device needs to initiate the plurality of random access attempts.

83. The terminal device of any of claims 57 to 82, wherein
the first configuration information further comprises a first time interval threshold and/or a configuration of a maximum number of consecutive random access attempts that the terminal device is allowed to initiate within an RAR window, and
the first time interval threshold indicates a minimum time interval between two consecutive random access attempts initiated by the terminal device.

84. The terminal device of any of claims 57 to 83, wherein
the first configuration information further comprises a first valid time,
the first configuration information is valid within the first valid time, and
the first configuration information becomes invalid after the first valid time elapses.

85. The terminal device of any of claims 57 to 84, wherein the first configuration information is carried in a system broadcast message or a dedicated signaling.

86. A network device, comprising:
a transmitting module configured to: transmit first configuration information to a terminal device, the first configuration information comprising one or more sets of random access resource configuration, and the first configuration information indicating that the terminal device is to initiate a random access procedure according to the one or more sets of random access resource configuration.

87. The network device of claim 86, wherein
random access resource configurations in a single set are all first type of random access resource configurations or second type of random access resource configurations, wherein
the first type of random access resource configuration comprises a dedicated random access preamble root sequence-related configuration, the dedicated random access preamble root sequence-related configuration is in a first association relationship with predefined information, and
the second type of random access resource configuration comprises a common random access preamble root sequence-related configuration.

88. The network device of claim 87, wherein the predefined information comprises a terminal device type identifier and/or a system application scenario identifier.

89. The network device of claim 87 or 88, wherein the first association relationship is an explicit relationship or an implicit relationship.

90. The network device of claim 89, wherein the first configuration information further comprises a terminal device type identifier and/or a system application scenario identifier when the first association relationship is the explicit relationship.

91. The network device of claim 89, wherein the first association relationship is predefined in a protocol when the first association relationship is the implicit relationship.

92. The network device of any of claims 88 to 91, wherein
the first association relationship between the dedicated random access preamble root sequence-related configuration and the terminal device type identifier comprises at least one of: a one-to-one mapping, a one-to-multiple mapping, or a multiple-to-multiple mapping; and/or
the first association relationship between the dedicated random access preamble root sequence-related configuration and the system application scenario identifier comprises at least one of: a one-to-one mapping, a one-to-multiple mapping, or a multiple-to-multiple mapping.

93. The network device of any of claims 88 to 92, wherein
the first configuration information comprises the first type of random access resource configuration, the second type of random access resource configuration, and the first association relationship; or
the first configuration information comprises the first type of random access resource configuration and the first association relationship and does not comprise the second type of random access resource configuration; or
the first configuration information comprises the second type of random access resource configuration and does not comprise the first type of random access resource configuration.

94. The network device of any of claims 88 to 93, wherein
a type of the terminal device is classified according to at least one of: a number of transmitting antennas supported by the terminal device, a number of receiving antennas supported by the terminal device, a dual connectivity capability supported by the terminal device, a carrier aggregation capability supported by the terminal device, a bandwidth combination capability supported by the terminal device, a maximum transmit power level supported by the terminal device, a radio access technology (RAT) type supported by the terminal device, a bandwidth size supported by the terminal device, or whether the terminal device is delay-sensitive; and/or
a system application scenario comprises at least one of: a terrestrial communication scenario, a satellite communication scenario, a geostationary earth orbit (GEO) scenario, a medium earth orbit (MEO) scenario, a low earth orbit (LEO) scenario, a delay-sensitive scenario, a non-delay-sensitive scenario, or an emergency communication scenario.

95. The network device of any of claims 87 to 94, wherein
the first configuration information further comprises a first threshold, and
the first threshold is used to allow the terminal device to initiate the random access procedure with the first type of random access resource configuration when a measurement result of the terminal device on a current serving cell or a target cell satisfies a first condition, wherein
the first condition is the measurement result being less than or equal to the first threshold, or
the first condition is the measurement result being greater than or equal to the first threshold.

96. The network device of claim 95, wherein
the first threshold is further used for the terminal device to initiate the random access procedure with the second type of random access resource configuration when the measurement result of the terminal device on the current serving cell or the target cell fails to satisfy the first condition.

97. The network device of claim 86, wherein
the first configuration information further comprises a second threshold, and
the one or more sets of random access resource configuration comprise: at least one set of dedicated random access preamble root sequence-related configuration and one set of common random access preamble root sequence-related configuration, wherein the dedicated random access preamble root sequence-related configuration is set according to a cell measurement result.

98. The network device of claim 97, wherein
the second threshold is used for the terminal device to initiate the random access procedure with the at least one set of dedicated random access preamble root sequence-related configuration when a measurement result of the terminal device on a current serving cell or a target cell satisfies a second condition, wherein
the second condition is the measurement result being less than or equal to the second threshold, or
the second condition is the measurement result being greater than or equal to the second threshold.

99. The network device of claim 98, wherein
the second threshold is further used for the terminal device to initiate the random access procedure with the common random access preamble root sequence-related configuration when the measurement result of the terminal device on the current serving cell or the target cell fails to satisfy the second condition.

100. The network device of any of claims 95 to 99, wherein
the measurement result comprises a cell-level measurement result or a beam-level measurement result.

101. The network device of any of claims 95 to 100, wherein
the measurement result comprises at least one of: a reference signal received power (RSRP), a reference signal received quality (RSRQ), or a signal to interference plus noise ratio (SINR).

102. The network device of any of claims 87 to 101, wherein
at least one set of random access resource configuration among the one or more sets of random access resource configuration further comprises: one or more message A (MSGA) physical uplink shared channel (PUSCH) resource configurations and/or one or more random access occasion (RO) resource configurations associated with a random access preamble root sequence-related configuration in the set of random access resource configuration.

103. The network device of claim 86, wherein
the first configuration information is used for a resource configuration for a contention free random access procedure, and
the first configuration information comprises a dedicated random access resource configuration containing one or more dedicated RO resources.

104. The network device of claim 103, wherein
the dedicated random access resource configuration further comprises: a dedicated random access preamble-related configuration corresponding to the one or more dedicated RO resources, and/or one or more dedicated MSGA PUSCH resource configurations corresponding to the one or more dedicated RO resources.

105. The network device of claim 103 or 104, wherein
the dedicated random access resource configuration containing the one or more dedicated RO resources belongs to a same set of contention free random access resource configuration; or
the dedicated random access resource configuration containing the one or more dedicated RO resources belongs to a plurality of sets of contention free random access resource configuration.

106. The network device of any of claims 86 to 105, wherein
the first configuration information further comprises first indication information, wherein the first indication information indicates whether the terminal device is allowed to initiate a new random access attempt before an end of a random access response (RAR) window corresponding to one random access attempt.

107. The network device of claim 106, wherein
the first indication information comprises a first bit, and
the terminal device is allowed to initiate the new random access attempt before the end of the RAR window corresponding to the random access attempt when the first bit is a first value; and
the terminal device is not allowed to initiate the new random access attempt before the end of the RAR window corresponding to the random access attempt when the first bit is a second value.

108. The network device of claim 106, wherein
the first indication information comprises a third threshold, and
the terminal device is allowed to initiate the new random access attempt before the end of the RAR window corresponding to the random access attempt if a measurement result of the terminal device on a current serving cell or a target cell satisfies a third condition; and
the terminal device is not allowed to initiate the new random access attempt before the end of the RAR window corresponding to the random access attempt if the measurement result of the terminal device on the current serving cell or the target cell fails to satisfy the third condition, wherein
the third condition is the measurement result being less than or equal to the third threshold, or
the third condition is the measurement result being greater than or equal to the third threshold.

109. The network device of claim 106, wherein
the first indication information comprises a second bit and a fourth threshold, and
the terminal device is allowed to initiate the new random access attempt before the end of the RAR window corresponding to the random access attempt if the second bit is a third value and a measurement result of the terminal device on a current serving cell or a target cell satisfies a fourth condition; and
the terminal device is not allowed to initiate the new random access attempt before the end of the RAR window corresponding to the random access attempt if the second bit is a fourth value and/or the measurement result of the terminal device on the current serving cell or the target cell fails to satisfy the fourth condition, wherein
the fourth condition is the measurement result being less than or equal to the fourth threshold, or
the fourth condition is the measurement result being greater than or equal to the fourth threshold.

110. The network device of any of claims 86 to 109, wherein
the first configuration information further comprises a first time interval threshold and/or a configuration of a maximum number of consecutive random access attempts that the terminal device is allowed to initiate within an RAR window, and
the first time interval threshold indicates a minimum time interval between two consecutive random access attempts initiated by the terminal device.

111. The network device of any of claims 86 to 110, wherein
the first configuration information further comprises a first valid time,
the first configuration information is valid within the first valid time, and
the first configuration information becomes invalid after the first valid time elapses.

112. The network device of any of claims 86 to 111, wherein the first configuration information is carried in a system broadcast message or a dedicated signaling.

113. A terminal device comprising:
a transceiver;
a memory configured to store computer programs; and
a processor configured to invoke and execute the computer programs stored in the memory to control the transceiver to perform the method of any of claims 1 to 29.

114. A network device comprising:
a transceiver;
a memory configured to store computer programs; and
a processor configured to invoke and execute the computer programs stored in the memory to control the transceiver to perform the method of any of claims 30 to 56.

115. A chip comprising at least one processor circuit configured to invoke and execute computer programs stored in a memory, to cause a device equipped with the chip to perform the method of any of claims 1 to 56.

116. A computer-readable storage medium for storing computer programs, the computer programs being operable with a computer to perform the method of any of claims 1 to 56.

117. A computer program product comprising computer program instructions operable with a computer to perform the method of any of claims 1 to 56.

118. A computer program operable with a computer to perform the method of any of claims 1 to 56.
